(19) Europäisches Patentamt
European Patent Office
Office européen des brevets

(11) **EP 4 542 892 A1**

(12) **EUROPEAN PATENT APPLICATION**
published in accordance with Art. 153(4) EPC

(43) Date of publication:
**23.04.2025 Bulletin 2025/17**

(21) Application number: **22949875.3**

(22) Date of filing: **08.07.2022**

(51) International Patent Classification (IPC):
**H04L 1/00** (2006.01)    **H04L 1/18** (2023.01)

(52) Cooperative Patent Classification (CPC):
**H04L 1/00; H04L 1/18**

(86) International application number:
**PCT/CN2022/104586**

(87) International publication number:
**WO 2024/007292 (11.01.2024 Gazette 2024/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **TANG, Zihan
Shenzhen, Guangdong 518129 (CN)**

• **MA, Mengyao
Shenzhen, Guangdong 518129 (CN)**
• **LI, Jiahui
Shenzhen, Guangdong 518129 (CN)**
• **GU, Jiaqi
Shenzhen, Guangdong 518129 (CN)**

(74) Representative: **Maiwald GmbH
Engineering
Elisenhof
Elisenstrasse 3
80335 München (DE)**

(54) **METHODS FOR TRANSMITTING DATA AND RECEIVING DATA, AND COMMUNICATION APPARATUS**

(57)     This application provides a method for transmitting data and a method for receiving data. In the method, a transmitting end obtains coding parameter information of to-be-transmitted data, where the coding parameter information indicates information related to physical layer data processing of the transmitting end, and the physical layer data processing includes a coding mode in which compression and channel coding are separately performed on a TB, or a coding mode in which compression and channel coding are jointly performed on each of a plurality of sub-TBs obtained based on the TB. The transmitting end determines a case in which the coding parameter information needs to be transmitted to the receiving end, and transmits the coding parameter information to the receiving end for data decoding. The method can provide protocol-layer support at a physical layer of a data transmitting end for implementation of the coding mode in which compression and channel coding are separated or the coding mode in which compression and channel coding are combined. This can improve data transmission performance in comparison with only performing channel coding at the physical layer without considering redundancy of the to-be-transmitted data.

FIG. 6

Description

TECHNICAL FIELD

Embodiments of this application relate to the field of wireless communication technologies, and more specifically, to a method for transmitting data, a method for receiving data, and a communication apparatus.

BACKGROUND

In an existing cellular system, a physical layer is mainly responsible for data coding and modulation and resource mapping, and a media access control (media access control, MAC) layer is mainly responsible for data packetizing and resource scheduling. For both the physical layer and the MAC layer, it is assumed that to-be-transmitted data from an upper layer has no redundancy or the redundancy is ignored, and only how to resist a channel transmission error is considered. Therefore, resource scheduling of the existing cellular system only considers using channel coding at the physical layer to resist the channel transmission error.

However, in an actual application scenario, the to-be-transmitted data at the physical layer of the cellular system may still have a specific degree of redundancy. For example, a compression algorithm at an application layer performs compression without fully using redundancy in data, upper-layer data is not compressed, and native data (for example, channel state information, or sensing data generated due to a sensing capability of an air interface) is generated by the air interface. In these cases, performing channel coding after the to-be-transmitted data is compressed at the physical layer and the MAC layer or using a coding mode in which compression and channel coding are combined can obtain better data transmission performance compared with using channel coding only. However, the existing cellular system does not support compression at the physical layer or a function of the coding mode in which compression and channel coding are combined. In addition, implementation of the function at the physical layer is also not supported at a cellular network protocol level.

SUMMARY

This application provides a method for transmitting data and a method for receiving data, to support at a physical layer of a data transmitting end, for to-be-transmitted data, a coding mode in which compression and coding are separated or a coding mode in which compression and channel coding are combined, and provide protocol-level support, to improve data transmission performance.

According to a first aspect, a method for transmitting data is provided, including:
A transmitting end obtains coding parameter information of first data, where the coding parameter information indicates information related to physical layer data processing of the transmitting end, the physical layer data processing includes performing first coding on a TB, and the first coding is a coding mode in which compression and channel coding are separated; or the physical layer data processing includes separately performing second coding on a plurality of sub-TBs obtained based on the TB, and the second coding is a coding mode in which compression and channel coding are combined.

The transmitting end determines whether to transmit the coding parameter information to a receiving end.

In the foregoing technical solution, the transmitting end obtains coding parameter information of to-be-transmitted data, where the coding parameter information indicates the information related to the physical layer data processing of the transmitting end, and the physical layer data processing includes the coding mode in which compression and channel coding are separately performed on the TB, or the coding mode in which compression and channel coding are jointly performed on each of the plurality of sub-TBs obtained based on the TB. The transmitting end determines a case in which the coding parameter information needs to be transmitted to the receiving end, and transmits the coding parameter information to the receiving end for data decoding. The method can provide protocol-layer support at a physical layer of a data transmitting end for implementation of the coding mode in which compression and channel coding are separated or the coding mode in which compression and channel coding are combined. This can improve data transmission performance in comparison with only performing channel coding at the physical layer without considering redundancy of the to-be-transmitted data.

In addition, source coding is generally understood as compression. Therefore, in the industry, the coding mode in which compression and channel coding are separated is also referred to as separate source and channel coding (separate source and channel coding, SSCC), and the coding mode in which compression and channel coding are combined is referred to as joint source and channel coding (joint source and channel coding, JSCC). Therefore, SSCC coding in the following refers to the coding mode in which compression and channel coding are separated, and JSCC refers to the coding mode in which compression and channel coding are combined. Details are not described in the following again.

With reference to the first aspect, in some implementations of the first aspect, the first data is newly transmitted data; and

That the transmitting end determines whether to transmit the coding parameter information to a receiving end includes:
The transmitting end determines to transmit the coding parameter information to the receiving end.

In this implementation, if the transmitting end transmits the newly transmitted data to the receiving end, the transmitting end needs to transmit the coding parameter information of the newly transmitted data to the receiving end. For example, in an uplink data transmission scenario or a downlink data transmission scenario, the transmitting end transmits the coding parameter information to the receiving end. The mechanism can provide protocol-layer support for use of SSCC or JSCC at a physical layer of the transmitting end.

With reference to the first aspect, in some implementations of the first aspect, the transmitting end is a terminal device.

That the transmitting end determines to transmit the coding parameter information to the receiving end includes:

The transmitting end receives first indication information from the receiving end, where the first indication information indicates the transmitting end to transmit the coding parameter information.

The transmitting end determines, based on the first indication information, to transmit the coding parameter information.

In this implementation, in uplink data transmission, the transmitting end is a terminal device. In this case, whether the transmitting end transmits the coding parameter information to the receiving end is determined based on an indication of a network device. Using the newly transmitted data as an example, in a case that a network side schedules the terminal device to transmit the newly transmitted data, the network side simultaneously transmits the first indication information to the terminal device, to indicate that the terminal device needs to transmit the coding parameter information of the newly transmitted data. In this mechanism, in an uplink data transmission (new transmission) scenario, protocol-layer support is provided for use of SSCC or JSCC at the physical layer of the transmitting end.

With reference to the first aspect, in some implementations of the first aspect, the first data is retransmitted data, and the transmitting end is a terminal device.

That the transmitting end determines whether to transmit the coding parameter information to a receiving end includes:
The transmitting end receives second indication information from the receiving end, where the second indication information indicates the transmitting end to transmit the coding parameter information.

The transmitting end determines, based on the second indication information, to transmit the coding parameter information to the receiving end.

Alternatively,

that the transmitting end determines whether to transmit the coding parameter information to a receiving end includes:
The transmitting end receives second indication information from the receiving end, where the second indication information indicates the transmitting end not to transmit the coding parameter information.

The transmitting end determines, based on the second indication information, not to transmit the coding parameter information to the receiving end.

In this implementation, in uplink data transmission, the transmitting end is a terminal device. In this case, whether the transmitting end transmits the coding parameter information to the receiving end is determined based on an indication of a network device. Using the retransmitted data as an example, in a case that the network side schedules the terminal device to transmit the retransmitted data, the network side simultaneously transmits the second indication information to the terminal device, to indicate the terminal device to transmit the coding parameter information of the retransmitted data, for example, in a case that the network side does not correctly decode the coding parameter information in previous uplink transmission; or the second indication information indicates the terminal device not to transmit the coding parameter information of the retransmitted data, for example, in a case that the network side correctly decodes the coding parameter information in previous uplink transmission and correctly decodes the data. In this mechanism, in an uplink data transmission (retransmission) scenario, protocol-layer support is provided for use of SSCC or JSCC at the physical layer of the transmitting end.

With reference to the first aspect, in some implementations of the first aspect, the first data is retransmitted data, and the transmitting end is a network device;

The transmitting end determines whether to transmit the coding parameter information to a receiving end includes:
The transmitting end receives first feedback information from the receiving end, where the first feedback information indicates that the receiving end does not correctly decode the coding parameter information.

The transmitting end determines, based on the first feedback information, to transmit the coding parameter information to the receiving end.

The method further includes:
The transmitting end receives second feedback information from the receiving end, where the second feedback information indicates that the receiving end does not correctly decode the first data.

The transmitting end retransmits the first data to the receiving end based on the second feedback information.

In this implementation, in downlink data transmission, the transmitting end is a network device. In this case, whether the transmitting end transmits the coding parameter information to the receiving end is determined based on a status of decoding the coding parameter information and the data by a terminal device in previous downlink data transmission. In the mechanism provided in this application, in downlink data transmission, the terminal device needs to separately feed back decoding statuses of the coding parameter information and the data to the transmitting end. Using the retransmitted data as an example, the network side receives, from the terminal device, the first feedback information feeding back the decoding status of the coding parameter information and the second feedback information feeding back the decoding status of the data. If the coding parameter information is not correctly decoded in previous downlink data transmission, it indicates that the data cannot be decoded either. That is, the first feedback information indicates that the terminal device does not correctly decode the coding parameter information, and the second feedback information indicates that the terminal device does not correctly decode the data. In this case, the network device retransmits the coding parameter information to the terminal device in current retransmission, and retransmits the data to the terminal device. In this mechanism, in a downlink data transmission (retransmission) scenario, protocol-layer support is provided for use of SSCC or JSCC at the physical layer of the transmitting end.

With reference to the first aspect, in some implementations of the first aspect, the first data is retransmitted data, and the transmitting end is a network device.

That the transmitting end determines whether to transmit the coding parameter information to a receiving end includes:

The transmitting end receives third feedback information from the receiving end, where the third feedback information indicates that the receiving end correctly decodes the coding parameter information.

The transmitting end determines, based on the third feedback information, not to transmit the coding parameter information to the receiving end.

The method further includes:

The transmitting end receives fourth feedback information from the receiving end, where the fourth feedback information indicates that the receiving end does not correctly decode the first data.

The transmitting end retransmits the first data to the receiving end based on the fourth feedback information.

In this implementation, in downlink data transmission, the transmitting end is a network device. In this case, whether the transmitting end transmits the coding parameter information to the receiving end is determined based on a status of decoding the coding parameter information and the data by a terminal device in previous downlink data transmission. In the mechanism provided in this application, in downlink data transmission, the terminal device needs to separately feed back decoding statuses of the coding parameter information and the data to the transmitting end. Using the retransmitted data as an example, the network side receives, from the terminal device, the third feedback information feeding back the decoding status of the coding parameter information and the fourth feedback information feeding back the decoding status of the data. If in previous downlink data transmission, the coding parameter information is correctly decoded but the data is not correctly decoded, the third feedback information indicates that the terminal device correctly decodes the coding parameter information, and the fourth feedback information indicates that the terminal device does not correctly decode the data. In this case, the network device does not need to transmit the coding parameter information to the terminal device in current retransmission, but only retransmits the data. In this mechanism, in a downlink data transmission (retransmission) scenario, protocol-layer support is provided for use of SSCC or JSCC at the physical layer of the transmitting end.

According to a second aspect, a data for receiving method is provided, including:

A receiving end receives first data from a transmitting end.

The receiving end decodes the first data based on coding parameter information of the first data.

The coding parameter information indicates information related to physical layer data processing of the transmitting end, the physical layer data processing includes performing first coding on a transport block TB, and the first coding is a coding mode in which compression and channel coding are separated; or the physical layer data processing includes separately performing second coding on a plurality of sub-TBs obtained based on the TB, and the second coding is a coding mode in which compression and channel coding are combined.

With reference to the second aspect, in some implementations of the second aspect, the first data is newly transmitted data, and the method further includes:

The receiving end receives the coding parameter information from the transmitting end.

With reference to the second aspect, in some implementations of the second aspect, the receiving end is a network device, and before the receiving end receives the first data from the transmitting end, the method further includes:

The receiving end transmits first indication information to the transmitting end, where the first indication information indicates the transmitting end to transmit the coding parameter information.

With reference to the second aspect, in some implementations of the second aspect, the first data is retransmitted data, and the receiving end is a network device.

Before the receiving end receives the first data from the transmitting end, the method further includes:

The receiving end determines that the coding parameter information is not correctly decoded.

The receiving end transmits second indication information to the transmitting end, where the second indication information indicates the transmitting end to transmit the coding parameter information.

The receiving end receives the coding parameter information from the transmitting end.

Alternatively,

before the receiving end receives the first data from the transmitting end, the method further includes:

The receiving end determines that the coding parameter information is correctly decoded.

The receiving end transmits second indication information to the transmitting end, where the second indication information indicates the transmitting end not to transmit the coding parameter information.

With reference to the second aspect, in some implementations of the second aspect, the first data is retransmitted data, and the receiving end is a terminal device.

The method further includes:

The receiving end transmits first feedback information and second feedback information to the transmitting end, where the first feedback information indicates that the receiving end does not correctly decode the coding parameter information, and the second feedback information indicates that the receiving end does not correctly decode the first data.

The receiving end receives the coding parameter information from the transmitting end.

With reference to the second aspect, in some implementations of the second aspect, the first data is retransmitted data, and the receiving end is a terminal device.

The method further includes:

The receiving end transmits third feedback information and fourth feedback information to the transmitting end, where the third feedback information indicates that the receiving end correctly decodes the coding parameter information, and the fourth feedback information indicates that the receiving end does not correctly decode the first data.

For following beneficial technical effects of the method in the second aspect or an implementation of the second aspect, refer to related descriptions of the corresponding technical solutions in the first aspect. Details are not described.

In some implementations of the first aspect or the second aspect, that the physical layer data processing includes performing first coding on a TB is specifically: compressing the TB to obtain a compressed TB, and then performing channel coding and rate matching on the compressed TB.

The coding parameter information specifically indicates a size of the compressed TB.

In this implementation, in comparison with a case that for a physical layer in an existing cellular system, redundancy of to-be-transmitted data is not considered or is ignored and only channel coding is performed, to resist a channel transmission error, the physical layer uses a coding mode in which compression and channel coding are separately performed on a TB, so that data transmission performance can be improved. In this case, the coding parameter information may be specifically the size of the compressed TB.

In some implementations of the first aspect or the second aspect, in a case that the physical layer data processing includes separately performing the second coding on the plurality of sub-TBs obtained based on the TB,

the plurality of sub-TBs include a control information sub-TB and X sub-TBs, the X sub-TBs are obtained by dividing the TB into a plurality of PBs and combining PBs whose sparsities fall within a same sparsity range into one sub-TB, the control information sub-TB indicates information about respective sparsities of the plurality of PBs, X is less than or equal to Y, Y is a quantity of preset sparsity ranges, Y is less than or equal to $2^Q$, and X, Y, and Q are positive integers; and the coding parameter information is length information of each of the plurality of sub-TBs.

In this implementation, in comparison with a case that for a physical layer in an existing cellular system, redundancy of to-be-transmitted data is not considered or is ignored and only channel coding is performed, to resist a channel transmission error, the physical layer uses a coding mode in which compression and channel coding are jointly performed on each of a plurality of sub-TBs obtained based on a TB, where the plurality of sub-TBs are obtained by dividing the TB into a plurality of PBs, and then combining PBs whose sparsities fall within a same sparsity range into one sub-TB. This implementation can improve data transmission performance. In this case, the coding parameter information may be specifically length information of each of the plurality of sub-TBs. The control information sub-TB indicates information about respective sparsities of the plurality of PBs.

In some implementations of the first aspect or the second aspect, for example, there are $2^Q$ preset sparsity ranges; the plurality of PBs are specifically B PBs, and B is a positive integer; the control information sub-TB specifically indicates indices of sparsity ranges corresponding to the sparsities of the B PBs, a sparsity range corresponding to a sparsity of each of the B PBs is one of the $2^Q$ preset sparsity ranges, and Q is a positive integer; and the control information sub-TB includes B·Q bits.

In this implementation, the sparsity is divided into $2^Q$ subintervals, that is, $2^Q$ sparsity ranges, and each sparsity range corresponds to one index (index). If the TB is divided into B PBs, a sparsity of each PB falls within one sparsity range in the $2^Q$ sparsity ranges. When the control information sub-TB indicates the information about the sparsities of the B PBs, the control information sub-TB may specifically indicate an index of the sparsity range corresponding to the sparsity of each PB. Therefore, because each PB needs Q bits to indicate the sparsity range of the PB, and there are B PBs in total, a length of the control information sub-TB is B·Q bits.

In this implementation, optionally, the coding parameter information may further include length information of each of the B PBs. Alternatively, length information of each of the B PBs may be configured in advance through upper layer signaling. This is not limited.

According to a third aspect, a communication apparatus is provided. The communication apparatus has functions of implementing the method in the first aspect or any possible implementation of the first aspect. The functions may be implemented by hardware, or may be implemented by hardware executing corresponding software. The hardware or the software includes one or more units corresponding to the foregoing functions.

According to a fourth aspect, a communication apparatus is provided. The communication apparatus has functions of implementing the method in the second aspect or any possible implementation of the second aspect. The functions may be implemented by hardware, or may be implemented by hardware executing corresponding software. The hardware or the software includes one or more units corresponding to the foregoing functions.

According to a fifth aspect, a communication apparatus is provided, including a processor and a memory. Optionally, the communication apparatus may further include a transceiver. The memory is configured to store a computer program, and the processor is configured to invoke and run the computer program stored in the memory and control the transceiver to receive and transmit a signal, to enable the communication apparatus to perform the method in the first aspect or any possible implementation of the first aspect.

According to a sixth aspect, a communication apparatus is provided, including a processor and a memory. Optionally, the communication apparatus may further include a transceiver. The memory is configured to store a computer program, and the processor is configured to invoke and run the computer program stored in the memory and control the transceiver to receive and transmit a signal, to enable the communication apparatus to perform the method in the second aspect or any possible implementation of the second aspect.

According to a seventh aspect, a communication apparatus is provided, including a processor and a communication interface. The communication interface is configured to receive data and/or information, and transmit the received data and/or information to the processor, the processor processes the data and/or the information, and the communication interface is further configured to output data and/or information obtained through processing by the processor, to enable the method in the first aspect or any possible implementations of the first aspect to be performed.

For example, the processor is configured to: obtain coding parameter information of first data, and determine whether to transmit the coding parameter information to a receiving end; and the communication interface is configured to output the coding parameter information in a case that the processor determines to transmit the coding parameter information to the receiving end.

According to an eighth aspect, a communication apparatus is provided, including a processor and a communication interface. The communication interface is configured to receive data and/or information, and transmit the received data and/or information to the processor, the processor processes the data and/or the information, and the communication interface is further configured to output data and/or information obtained through processing by the processor, to enable the method in the second aspect or any possible implementations of the second aspect to be performed.

For example, the communication interface is configured to: receive first data from a transmitting end, and transmit the first data to the processor; the processor is configured to decode the first data based on coding parameter information of the first data; and the communication interface is further configured to output a decoding result.

According to a ninth aspect, a communication apparatus is provided, including at least one processor. The at least one processor is coupled to at least one memory, and the at least one processor is configured to execute a computer program or instructions stored in the at least one memory, to enable the communication apparatus to perform the method in the first aspect or any possible implementation of the first aspect.

According to a tenth aspect, a communication apparatus is provided, including at least one processor. The at least one processor is coupled to at least one memory, and the at least one processor is configured to execute a computer program or instructions stored in the at least one memory, to enable the communication apparatus to perform the method in the second aspect or any possible implementation of the second aspect.

According to an eleventh aspect, a computer-readable storage medium is provided, where the computer-readable storage medium stores computer instructions, and when the computer instructions are run on a computer, the method in the first aspect, the second aspect, or any possible implementation of the aspects is performed.

According to a twelfth aspect, a computer program product is provided. The computer program product includes computer program code, and when the computer program code is run on a computer, the method in the first aspect, the second aspect, or any possible implementation of the aspects is performed.

According to a thirteenth aspect, a wireless communication system is provided, including the communication apparatus according to the third aspect and/or the communication apparatus according to the fourth aspect.

## BRIEF DESCRIPTION OF DRAWINGS

FIG. 1 is a diagram of a communication scenario applicable to an embodiment of this application;

FIG. 2 is a schematic flowchart of uplink resource application, scheduling, and data transmission in a cellular system;

FIG. 3 is a diagram of a relationship between uplink resource scheduling and coding and modulation;

FIG. 4 is a diagram of a relationship between uplink resource scheduling and coding and modulation when SSCC is used at a physical layer of a cellular system;

FIG. 5 is a diagram of a TB processing process when JSCC is used at a physical layer;

FIG. 6 is a schematic flowchart of a method for transmitting data and a method for receiving data according to this application;

FIG. 7 is a diagram of a TB preprocessing process when JSCC is used at a physical layer according to this application;

FIG. 8 is a schematic flowchart of transmitting data and receiving data according to this application;

FIG. 9 shows a transition relationship among three states in a HARQ process;

FIG. 10 is a schematic flowchart of transmitting data and receiving data according to this application;

FIG. 11 is a block diagram of a communication apparatus according to this application; and

FIG. 12 is a diagram of a structure of a communication apparatus according to this application.

## DESCRIPTION OF EMBODIMENTS

The following describes technical solutions in embodiments of this application with reference to accompanying drawings

The technical solutions in embodiments of this application may be applied to various communication systems, including but not limited to a 5th generation (the 5th generation, 5G) system or a new radio (new radio, NR) system, a long term evolution (long term evolution, LTE) system, a long term evolution-advanced (long term evolution-advanced, LTE-A) system, an LTE frequency division duplex (frequency division duplex, FDD) system, an LTE time division duplex (time division duplex, TDD) system, and the like. The technical solutions may also be applied to a future communication system, for example, a sixth generation mobile communication system. In addition, the technical solutions may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system or another communication system, and the like. In addition, the technical solutions may be further extended to a similar wireless communication system, for example, a communication system related to wireless fidelity (wireless fidelity, Wi-Fi), worldwide interoperability for microwave access (worldwide interoperability for microwave access, WiMAX), and the 3rd generation partnership project (3rd generation partnership project, 3gpp), which is not limited.

The communication system applicable to this application may include one or more transmitting ends and one or more receiving ends. Optionally, one of the transmitting end and the receiving end may be a terminal device, and the other may be a network device.

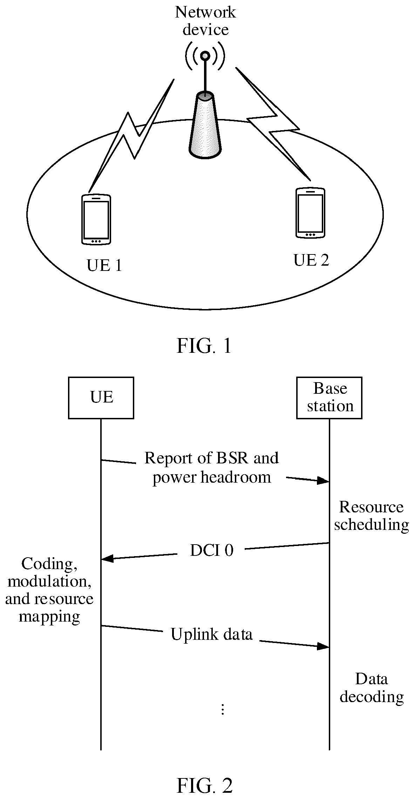

FIG. 1 is a diagram of a communication scenario applicable to an embodiment of this application. As shown in FIG. 1, this embodiment of this application is applicable to uplink data transmission and is also applicable to downlink data transmission. In FIG. 1, only uplink data transmission or downlink data transmission between one base station and two UEs (for example, a UE 1 and a UE 2) is used as an example. In uplink data transmission, the transmitting end in this specification is a terminal device, and the receiving end is a network device. In downlink data transmission, the transmitting end is a network device, and the receiving end is a terminal device. In addition, applicability of embodiments of this application in another communication scenario is not limited. For example, embodiments of this application may also be applied to sidelink communication.

In some embodiments of this specification, a 5G system is used as an example to describe specific solution details. It may be understood that when the solution is applied to another communication system, for example, an LTE system or a future communication system, messages, channels, information, or the like in the solution may be replaced with messages, channels, information, or the like that can implement corresponding functions in the another communication system. This is not limited in this application. For example, a buffer status report may be (buffer status report, BSR) in 5G, and a physical uplink shared channel may be (physical uplink shared channel, PUSCH) in 5G.

For example, the terminal device may also be referred to as a user equipment (user equipment, UE), an access terminal, a subscriber unit, a subscriber station, a mobile station, a mobile terminal (mobile terminal, MT), a remote station, a remote terminal, a mobile device, a user terminal, a terminal, an uncrewed aerial vehicle, a wireless communication device, a user agent, or a user apparatus. The terminal device in embodiments of this application may be a device that provides voice and/or data connectivity for a user, and may be configured to connect a person, an object, and a machine, for example, a handheld device or a vehicle-mounted device with a wireless connection function. The terminal device in embodiments of this application may be a mobile phone (mobile phone), a tablet computer (pad), a notebook computer, a palmtop computer, a mobile Internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

In embodiments of this application, an apparatus configured to implement a function of a terminal may be a terminal, or may be an apparatus that can support the terminal in implementing the function, for example, a chip system or a chip. The apparatus may be installed in the terminal. In embodiments of this application, the chip system may include a chip, or may include a chip and another discrete component.

For example, the network device may be a device having a wireless transceiver function. The network device may be a device providing a wireless communication function service, and is usually located on a network side, including but not limited to a next generation NodeB (gNodeB, gNB) in a fifth generation (5th generation, 5G) communication system, a base station in a sixth generation (6th generation, 6G) mobile communication system, a base station in a future mobile communication system, or an access node in a wireless fidelity (wireless fidelity, Wi-Fi) system, an evolved NodeB (evolved NodeB, eNB) in a long term evolution (long term evolution, LTE) system, a radio network controller (radio network controller, RNC), a NodeB (NodeB, NB), a base station controller (base station controller, BSC), a home base station (for example, a home evolved NodeB, or a home NodeB, HNB), a baseband unit (baseband unit, BBU), a transmission reception point (transmission reception point, TRP), a transmission point (transmission point, TP), a base transceiver station (base transceiver station, BTS), a satellite, an uncrewed aerial vehicle, or the like. In a network structure, the network device may include a central unit (central unit, CU) node, a distributed unit (distributed unit, DU) node, a RAN device including a CU node and a DU node, or a RAN device including a CU-control plane node, a CU-user plane node, and a DU node. Alternatively, the network device may be a radio controller, a relay station, a vehicle-mounted device, a wearable device, and the like in a cloud radio access network (cloud radio access network, CRAN) scenario. In addition, the base station may be a macro base station, a micro base station, a relay node, a donor node, or a combination thereof. The base station may alternatively be a communication module, a modem, or a chip that is disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies. This is not limited.

In embodiments of this application, an apparatus configured to implement a function of the network device may be a network device, or may be an apparatus that can support the network device in implementing the function, for example, a chip system or a chip. The apparatus may be installed in the network device. In embodiments of this application, the chip system may include a chip, or may include a chip and another discrete component.

In an existing cellular system, operations at a physical layer (physical, PHY) and a MAC layer are performed by assuming that to-be-transmitted data from an upper layer has no redundancy, or the redundancy is ignored, and only how to resist a channel transmission error is considered. A basic procedure is shown in FIG. 2.

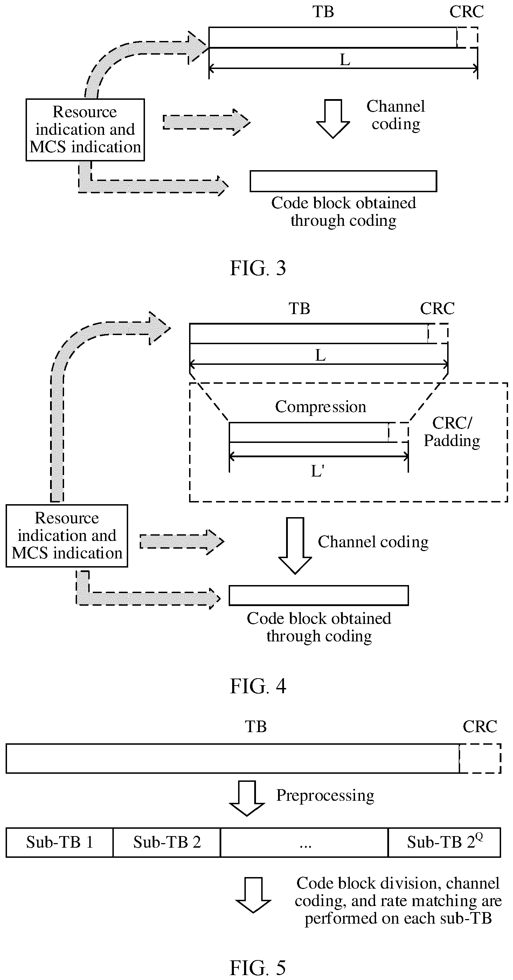

FIG. 2 is a schematic flowchart of uplink resource application, scheduling, and data transmission in a cellular system. As shown in FIG. 2, a base station schedules an uplink resource for a UE based on information such as a buffer status report (buffer status report, BSR) and a power headroom of the UE. The BSR is mainly used to notify the base station of a data amount of to-be-transmitted data in each logical channel buffer of the UE, so that the base station can determine, based on the information, an amount of air interface resources scheduled for the UE. Resource scheduling of the base station is notified to the UE by delivering downlink control information (downlink control information, DCI), for example, a DCI format 0 (generally denoted as DCI 0 for short) on a downlink control channel. Fields related to resource scheduling in the DCI 0 are mainly a resource indication and an MCS indication. The resource indication indicates a time-frequency resource for transmitting uplink data, and the MCS indication indicates a channel coding code rate and a modulation order that are used on the time-frequency resource. FIG. 3 is a diagram of a relationship between uplink resource scheduling and coding and modulation. As shown in FIG. 3, the resource indication and the modulation and coding scheme (modulation and coding scheme, MCS) indication jointly determine a size of a physical layer transport block (that is, a code block before channel coding) of the UE, a code rate of channel coding, and a size of a code block obtained through channel coding. Code blocks obtained through channel coding are modulated, and are mapped to corresponding time-frequency resources for transmission. It can be learned that only channel error protection is considered in coding and modulation and resource scheduling of the cellular system, and redundancy that can be used in the to-be-transmitted data is ignored.

It is known that a unit for transmitting data at the physical layer is a transport block (transport block, TB). If the TB still has a specific redundancy, a coding mode in which compression and channel coding are separated or a coding mode in which compression and channel coding are combined is introduced at the physical layer, and the redundancy of the to-be-transmitted data at the physical layer may be used to further improve data transmission performance. However, the physical layer of the cellular system does not support the coding mode in which compression and channel coding are separated, and does not support the coding mode in which compression and channel coding are combined either. In addition, a protocol level (for example, a signaling procedure for resource scheduling) does not support implementation of this function at the physical layer.

Although using SSCC or JSCC at the physical layer can improve the data transmission performance, SSCC or JSCC is not supported at the protocol level of an existing cellular system. If a channel coding function at a physical layer of the existing cellular system is updated to SSCC or JSCC, a series of signaling indication problems are caused.

FIG. 4 is a diagram of a relationship between uplink resource scheduling and coding and modulation when SSCC is used at a physical layer of a cellular system. As described above, the resource indication and the MCS indication in the downlink control information of the base station jointly determine a size of the TB (for example, a length L in FIG. 3), coding and modulation, and resource mapping (a resource size). It can be learned that the resource indication and the MCS indication are indispensable for successful decoding at a receiving end. For example, an example in which SSCC is used at the physical layer is used. After compression is introduced at the physical layer, data needs to be first compressed (in a lossy or lossless manner), and then a TB whose length is L is compressed into a new TB whose length is $L'$. Optionally, cyclic redundancy check (cyclic redundancy check, CRC) or padding (padding) may be added after the new TB, and finally channel coding is performed.

The UE compresses the TB based on the redundancy of the to-be-transmitted data, so that the length of the TB changes from L to $L'$, and $L'$ determines a rate matching manner of channel coding. Therefore, the length L' of the compressed TB is also necessary information for decoding at the receiving end. The receiving end can calculate an actual code rate of channel coding and an actual rate matching manner based on the information by using a same rule as a transmitting end. Otherwise, decoding cannot be performed.

Using JSCC at the physical layer also brings a similar signaling indication problem.

FIG. 5 is a diagram of a TB processing process when JSCC is used at a physical layer. If JSCC is used at the physical layer, the physical layer performs a series of preprocessing on the TB. After preprocessing, a plurality of sub-TBs are obtained based on the TB. In FIG. 5, $2^Q$ sub-TBs are used as an example, and Q is a positive integer. The $2^Q$ sub-TBs have different sparsities. Due to different sparsities, the sub-TBs are separately divided into code blocks, and channel coding may be performed by using different code rates and different rate matching manners may be used. In this case, a length of each sub-TB determines a channel coding code rate and a rate matching manner in JSCC. If the receiving end cannot learn length information of each of the plurality of sub-TBs, decoding cannot be performed.

Therefore, this application provides a method for transmitting data and a method for receiving data, to provide support in a signaling procedure for implementing an SSCC function or a JSCC function at a physical layer, so that a cellular system supports the SSCC function or the JSCC function at the physical layer at a protocol level, to further improve data transmission performance.

The following describes the method for transmitting data and receiving data provided in this application.

The technical solutions provided in this application are applicable to both uplink data transmission and downlink data transmission. Descriptions are separately provided in the following.

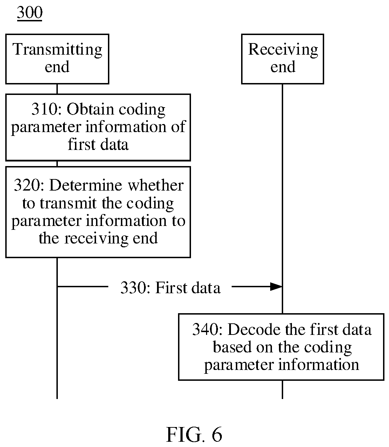

FIG. 6 is a schematic flowchart of a method for transmitting data and a method for receiving data according to this application.

310: A transmitting end obtains coding parameter information of first data.

The coding parameter information indicates information related to physical layer data processing of the transmitting end. Optionally, the physical layer data processing may include the following two implementations:

(1) Perform first coding on a TB, where the first coding is a coding mode in which compression and channel coding are separated.

(2) Separately perform second coding on a plurality of sub-TBs obtained based on the TB, where the second coding is a channel coding mode in which compression and channel coding are combined.

It should be understood that the coding parameter information is generated at a physical layer of the transmitting end.

In the former implementation, the physical layer of the transmitting end first compresses the TB to obtain a compressed TB, and then performs channel coding and rate matching on the compressed TB. In this implementation, the coding parameter information may be specifically a size of the compressed TB like L' in FIG. 3.

In the latter implementation, the physical layer of the transmitting end first preprocesses the TB. A detailed preprocessing process is roughly as follows: The TB is first divided into several PBs, and then the PBs are combined based on respective sparsities of the PBs, to obtain a plurality of sub-TBs. Specifically, if Q bits are used to represent the sparsities of the PBs, a maximum of $2^Q$ sparsity ranges may be set, and the sparsity of each PB falls within one of the $2^Q$ sparsity ranges, where Q is a positive integer. For example, Y sparsity ranges are set, where Y is less than or equal to $2^Q$. In a process of combining the several PBs into sub-TBs, PBs whose sparsities fall within a same sparsity range are combined into one sub-TB. It is assumed that X sub-TBs are obtained through combination, each of the X sub-TBs corresponds to one sparsity range, and the sparsity range belongs to one of the Y sparsity ranges, where X is less than or equal to Y, and X is a positive integer. Optionally, distribution of the sparsity ranges may be agreed upon by the transmitting end and the receiving end in advance, or specified in a protocol, or temporarily determined in one data transmission. If the distribution is temporarily determined, the transmitting end needs to notify the receiving end by using signaling.

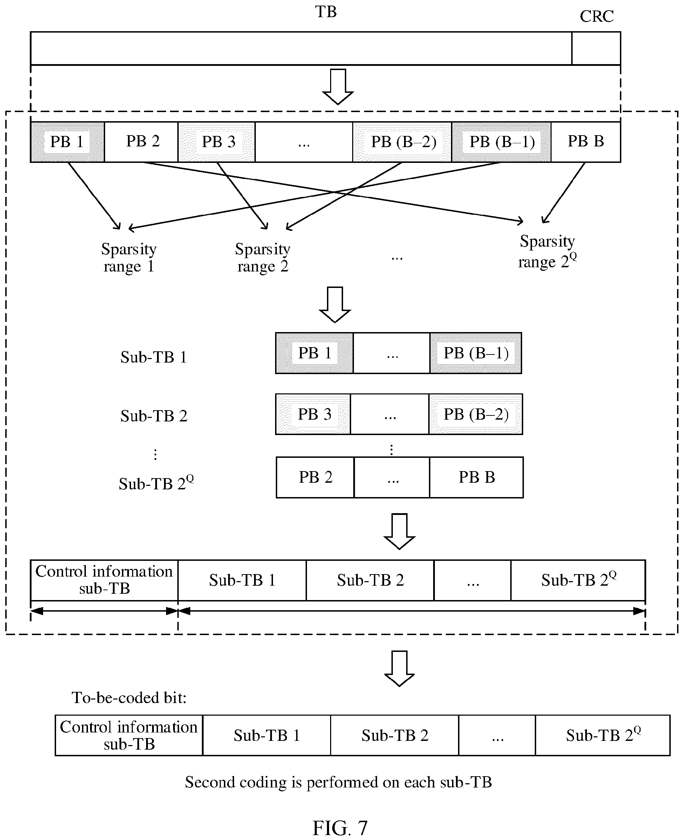

The following provides an example with reference to FIG. 7.

FIG. 7 is a diagram of a TB preprocessing process when JSCC is used at a physical layer according to this application. In this example, $2^Q$ sparsity ranges are preset, and then the TB is divided into B preprocessing blocks (processing blocks, PBs) based on a fixed PB length (for example, $N_s$), and the B PBs are combined into several sub-TBs (sub-TBs) based on sparsities. For example, PBs whose sparsities fall within a same sparsity range form one sub-TB, to obtain X sub-TBs. Because not each sparsity range necessarily corresponds to one sub-TB, X is less than or equal to $2^Q$. In FIG. 7, an example in which B PBs are combined to obtain $2^Q$ sub-TBs is used for description. Therefore, the preset $2^Q$ sparsity ranges respectively correspond to one sub-TB. In addition, a control information sub-TB is created, and the control information sub-TB indicates information about respective sparsities of the B PBs. For example, if each of the preset $2^Q$ sparsity ranges corresponds to an index, for example, the control information sub-TB may indicate indices of sparsity ranges corresponding to the sparsities of the B PBs. A length of the control information sub-TB is $L_0$. Further, because each PB needs Q bits to indicate a sparsity range of the PB, and there are B PBs in total, the length (that is, $L_0$) of the control information sub-TB is B·Q bits, and both B and Q are positive integers.

Optionally, a location of the control information sub-TB may be a location of the first sub-TB, as shown in FIG. 7, or may be another location among the plurality of sub-TBs. The transmitting end and the receiving end may agree on the location of the control information sub-TB. If JSCC is used, second coding is independently performed on each of the plurality of sub-TBs, that is, each sub-TB is independently processed by using the coding mode in which compression and channel coding are combined. Particularly, in a process of performing JSCC on the plurality of sub-TBs, a compression rate of the control information sub-TB is 1, or in other words, only channel coding is performed on the control information sub-TB, and second coding is performed on each of the remaining $2^Q$ sub-TBs. In this implementation, the coding parameter information may be specifically length information of each of the plurality of sub-TBs. The network side restores data in the received TB based on the coding parameter information according to the same rule.

In addition, it should be noted that, in this embodiment of this application, because the coding parameter information and the uplink data need to be multiplexed onto a physical uplink shared channel for transmission, a size of the coding parameter information is a fixed value rather than a variable value. Therefore, a quantity of sub-TBs obtained by combining PBs each time is fixed by default. Particularly, if there are Y preset sparsity ranges, and some sparsity ranges in the Y sparsity ranges do not have corresponding sub-TBs (or no PB falls within the sparsity ranges in the Y sparsity ranges), it is considered that a length of a sub-TB corresponding to each of the sparsity range is 0. Correspondingly, when the coding parameter information indicates the length information of each of the plurality of sub-TBs, a length of the coding parameter information is also fixed.

In addition, in this application, the sparsity of one PB is a proportion of 1 in the PB. Optionally, the sparsity of one PB may also be replaced with other information that can reflect "the proportion of 1 in the PB", for example, a proportion of 0 in the PB, or quantization level information of the proportion of 1 in the PB. This is not limited.

320: The transmitting end determines whether to transmit the coding parameter information of the first data to the receiving end.

In step 320, based on a plurality of different cases, whether the transmitting end transmits the coding parameter information to the receiving end is also different.

(1) In a possible case, the first data is newly transmitted data, and the transmitting end determines to transmit the coding parameter information of the first data to the receiving end.

If the first data is newly transmitted data, the transmitting end transmits the coding parameter information of the first data to the receiving end, so that the receiving end decodes the first data based on the coding parameter information.

In an example, in uplink data transmission, that is, the transmitting end is a terminal device, and the receiving end is a network device. The network device transmits first indication information to the terminal device, and the first indication information indicates the terminal device to transmit the coding parameter information of the first data. It should be understood that the first indication information may be delivered to the terminal device together with scheduling information of the first data. The terminal device may learn, based on the scheduling information of the first data, that current uplink transmission scheduling is new transmission, and learn, based on the first indication information, the coding parameter information of the newly transmitted data that needs to be transmitted to the network side.

In another example, in downlink data transmission, that is, the transmitting end is a network device, and the receiving end is a terminal device. In addition to transmitting the newly transmitted first data to the terminal device, the network device further transmits the coding parameter information of the first data to the terminal device.

(2) In another possible case, the first data is retransmitted data.

When the first data is retransmitted data, whether the transmitting end transmits the coding parameter information of the first data to the receiving end is related to a decoding result of the coding parameter information in previous transmission and a decoding result of the first data.

In an example, in uplink data transmission, the network device decodes the first data from the terminal device and the coding parameter information of the first data. In a possible case, in the previous uplink transmission, the coding parameter information is not correctly decoded, and in this case, the first data cannot be correctly decoded either. In this uplink transmission, in addition to scheduling the terminal device to retransmit the first data, the network device further transmits second indication information to the terminal device, and the second indication information indicates the terminal device to transmit the coding parameter information. In another possible case, in the previous uplink transmission, the network device correctly decodes the coding parameter information, but does not correctly decode the first data. In this uplink transmission, the network device schedules the terminal device to retransmit the first data. In addition, the network device transmits second indication information to the terminal device, and the second indication information indicates the terminal device not to transmit the coding parameter information of the data.

In an example, in downlink data transmission, the terminal device receives the coding parameter information and the data from the network device, and feeds back a decoding result for the coding parameter information and a decoding result for the data to the network device. The network device determines, based on the feedback of the terminal device, that next downlink data transmission is retransmission or new transmission, and whether to transmit the coding parameter information of the downlink data to the terminal device. In a possible case, in previous downlink transmission, the terminal device does not correctly decode the coding parameter information, and does not correctly decode the first data. The terminal device transmits first feedback information and second feedback information to the network device, where the first feedback information indicates that the terminal device does not correctly decode the coding parameter information, and the second feedback information indicates that the terminal device does not correctly decode the first data. The network device schedules, in current downlink transmission based on the second feedback information from the terminal device, the terminal device to retransmit the first data. In addition, the network device retransmits the coding parameter information of the first data to the terminal device in the current downlink transmission based on the first feedback information, for the terminal device to decode the first data. In another possible case, in previous downlink transmission, the terminal device correctly decodes the coding parameter information, but does not correctly decode the first data. The terminal device transmits third feedback information and fourth feedback information to the network device, where the third feedback information indicates that the terminal device correctly decodes the coding parameter information, and the fourth feedback information indicates that the terminal device does not correctly decode the first data. The network device schedules, in current downlink transmission based on the fourth feedback information from the terminal device, the terminal device to retransmit the first data. In addition, the network device does not transmit the coding parameter information of the first data to the terminal device in the current downlink transmission based on the third feedback information. The terminal device decodes, based on the coding parameter information correctly decoded in the previous transmission, the first data retransmitted in the current transmission.

It should be understood that, in step 320, if the transmitting end determines to transmit the coding parameter information to the receiving end, the transmitting end further transmits the coding parameter information to the receiving end. In addition, this data transmission further includes transmitting the first data by the transmitting end to the receiving end; and if the transmitting end determines not to transmit the coding parameter information to the receiving end, the transmitting end does not transmit the coding parameter information to the receiving end. In this case, this data transmission includes only transmitting the first data by the transmitting end to the receiving end.

330: The transmitting end transmits the first data to the receiving end.

The receiving end receives the first data from the transmitting end.

The first data herein is data obtained by performing physical layer data processing (for example, an SSCC coding mode or a JSCC coding mode) proposed in this application on to-be-transmitted data at the physical layer of the transmitting end. Then, operations such as rate matching, modulation, digital-to-analog conversion, and frequency conversion are further performed on the first data at the transmitting end, and a signal obtained through the processing and/or the operations is transmitted through a wireless channel. It can be learned that the signal transmitted on the wireless channel is no longer the first data. Because this embodiment of this application mainly focuses on physical layer processing performed by a transmitting end in a wireless communication system in a process of transmitting a radio signal, the foregoing other processing and/or operations after the physical layer processing are not described in detail in this specification. In addition, a signal transmitted by the transmitting end is referred to as first data without affecting understanding of the technical solution.

Correspondingly, the receiving end receives the radio signal through the wireless channel, and the radio signal is not the first data. After performing processing and/or operations such as frequency conversion, analog-to-digital conversion, demodulation, and rate de-matching on the received radio signal, the receiving end obtains the first data. Similarly, in this specification, a signal received by the receiving end is referred to as first data without affecting understanding of the technical solution.

340: The receiving end decodes the first data based on the coding parameter information of the first data.

It can be learned with reference to the descriptions of various cases in step 320 and step 330 that, in step 340, the coding parameter information required by the receiving end to decode the first data may be received from the transmitting end and correctly decoded in current data transmission, or may be correctly decoded in previous data transmission.

The following separately describes applications of the method for transmitting data and receiving data provided in this application in uplink data transmission and downlink data transmission.

1. Uplink data transmission

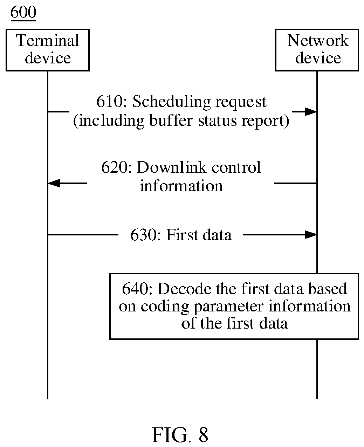

FIG. 8 is a schematic flowchart of transmitting data and receiving data according to this application.

610: A terminal device transmits a scheduling request (scheduling request, SR) to a network device, where the scheduling request requests the network device to schedule a resource for uplink data transmission of the terminal device.

Optionally, the scheduling request may include a buffer status report, and the buffer status report indicates a data amount of to-be-transmitted uplink data of the terminal device.

The network device receives the scheduling request from the terminal device, and schedules the resource for the uplink data transmission of the terminal device based on the scheduling request.

Optionally, the scheduling request further includes information such as a power headroom of the terminal device.

620: The network device transmits downlink control information to the terminal device, and the terminal device receives the downlink control information from the network device.

For example, the downlink control information carries a first indication field, and the first indication field includes a first value and a second value. When the first indication field is the first value, the first indication field indicates the terminal device to transmit coding parameter information. When the first indication field is the second value, the first indication field indicates the terminal device not to transmit coding parameter information. For example, the first value is 1, and the second value is 0. Alternatively, another value may be used for indication. This is not limited.

For example, the downlink control information may be downlink control information in a specific format, for example, a DCI format 0 or a DCI format 1. This is not limited.

In addition, because the coding parameter information provided in this application may be actually considered as new UCI, when the terminal device multiplexes the coding parameter information and the data on a PUSCH for transmission, the terminal device further obtains a code rate compensation factor of the coding parameter information from a network side. Therefore, the downlink control information may further include the code rate compensation factor for the coding parameter information. Optionally, the code rate compensation factor may alternatively be configured by an upper layer of the network device. This is not limited.

It should be understood that the code rate compensation factor is used to adjust a quantity of REs that are occupied by the coding parameter information on the physical uplink shared channel. Using 5G as an example, the physical uplink shared channel may be (physical uplink shared channel, PUSCH).

For example, in addition to the foregoing information, the downlink control information further includes resource indication information and MCS indication information. The resource indication information indicates a time-frequency resource on which the terminal device transmits the uplink data, and the MCS indication information indicates information such as a channel coding code rate and a modulation order that need to be used when the terminal device transmits the uplink data on the time-frequency resource.

630: The terminal device transmits first data to the network device based on the downlink control information. Optionally, if the first indication field indicates to transmit the coding parameter information, in step 630, the terminal device further transmits coding parameter information of the first data to the network device.

For example, if the first data and the coding parameter information of the first data are transmitted, the terminal device multiplexes the first data and the coding parameter information of the first data on the physical uplink shared channel for transmission.

In step 630, for whether the terminal device transmits the coding parameter information of the first data to the network device, refer to the descriptions in step 320, and details are not described herein again.

The network device receives the first data from the terminal device. Alternatively, in another possible case, the network device receives the first data and the coding parameter information of the first data from the terminal device.

640: The network device decodes the first data based on the coding parameter information of the first data.

In the foregoing case, in step 630, the network device receives the first data and the coding parameter information of the first data from the terminal device. In this case, the network device first demultiplexes the first data and the coding parameter information, decodes the coding parameter information, and then decodes the first data based on a decoding status of the coding parameter information. In another case, in step 630, the network device receives the first data from the terminal device, and the first data is retransmitted data. The network device decodes the first data based on the coding parameter information of the first data that is correctly decoded in the previous uplink transmission.

It can be learned that, in one data transmission, whether the transmitting end transmits coding parameter information related to transmitted data to the receiving end includes a plurality of cases, and specifically needs to be determined based on various cases of new transmission and retransmission. The following describes a reporting indication of the coding parameter information and transmission of the coding parameter information in a new transmission process and a retransmission process, and behaviors of the network device and the terminal device in various cases in the new transmission process and the retransmission process.

The following uses a gNB and a UE in 5G as an example for description.

The gNB may define the following three states for each hybrid automatic repeat request (hybrid automatic repeat request, HARQ) process:

State A: A DCI indication transmitted by the gNB indicates that current transmission is new transmission, and indicates the UE to report the coding parameter information.

State B: A DCI indication transmitted by the gNB indicates that current transmission is retransmission, and indicates the UE to report the coding parameter information.

State C: A DCI indication transmitted by the gNB indicates that current transmission is retransmission, and indicates the UE not to report the coding parameter information.

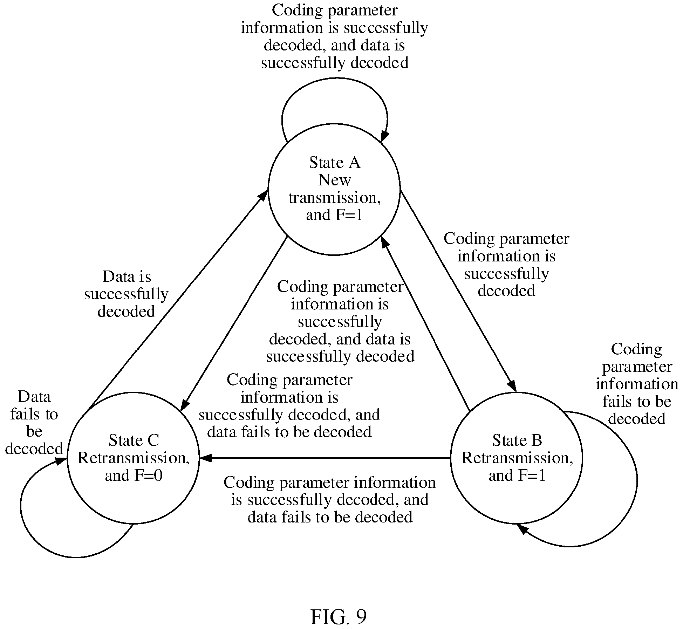

FIG. 9 shows a transition relationship among three states in a HARQ process.

It should be noted that new transmission or retransmission may be indicated by using a corresponding field in the DCI. Using 5G as an example, new transmission or retransmission may be indicated by using a new data indicator (new data indicator, NDI) in the DCI. In addition, F in FIG. 9 is an example of the first indication field in step 620.

The gNB determines, based on a status of a current HARQ process, for example, new transmission or retransmission, how to indicate the UE, and indicates the UE to report the coding parameter information or not to report the coding parameter information.

Behaviors on the UE side mainly include the following three aspects:

whether to transmit the UCI proposed in this application, that is, the coding parameter information;

whether to perform retransmission; and

which part of data is to be retransmitted (determined by a CBG-ACK), where CBG represents a code block group (code block group).

After receiving the data and the coding parameter information that are transmitted by the UE, the gNB performs resource demultiplexing and data decoding operations, and then changes the status of the current HARQ process based on a decoding result. Specifically, state transition of the HARQ process is mainly determined by two factors: whether the gNB correctly decodes the coding parameter information transmitted by the UE, and whether the gNB correctly decodes data of a whole TB. For state transition of the HARQ process, refer to FIG. 7.

In a possible case, if the data of the whole TB is successfully decoded in the current transmission, the HARQ process enters the state A, and the gNB indicates the UE to transmit a new TB next time.

In another possible case, if the gNB fails to correctly decode the coding parameter information, the HARQ process enters the state B, and the gNB indicates the UE to retransmit the same TB next time and indicates the UE to multiplex the reporting of the coding parameter information on the PUSCH.

In still another possible case, if the gNB successfully decodes the coding parameter information in the UCI, but fails to correctly decode the data, the HARQ process enters the state C, and the gNB indicates, in next scheduling, that the UE does not need to report the coding parameter information, and schedules a resource of a CB or a CBG that needs to be retransmitted. Other fields in the DCI are similar to those in retransmission in NR. For example, the DCI further includes information such as a resource indication, an MCS, a HARQ process number, an NDI, a redundancy version (redundancy version, RV), a DAI, and CBGTI. It should be understood that, in a case that the gNB has successfully decoded the coding parameter information, if only the data fails to be decoded, the RV needs to be updated.

2. Downlink data transmission

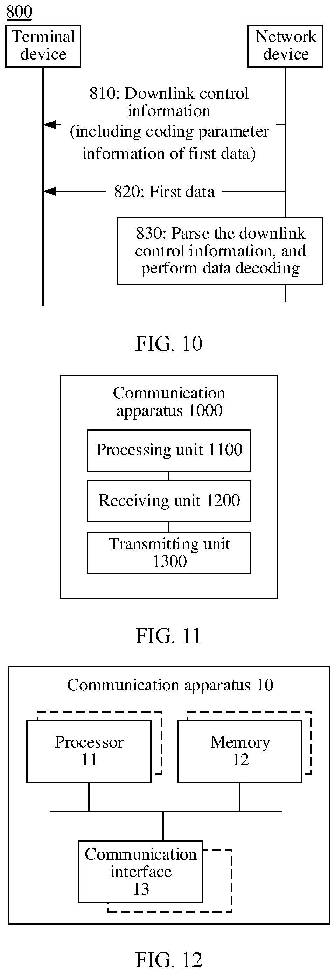

FIG. 10 is a schematic flowchart of transmitting data and receiving data according to this application.

810: A network device transmits downlink control information to a terminal device. The downlink control information includes coding parameter information of first data.

Optionally, the downlink control information may be a DCI format 1 (denoted as DCI 1) in NR, or may be a DCI type specially added for SSCC or JSCC introduced at the physical layer. This is not limited.

For example, in NR, the network device transmits the DCI 1 on a PDCCH, and the DCI 1 includes the coding parameter information of the first data.

820: The network device transmits the first data to the terminal device.

For example, in NR, the network device transmits the first data on a PDSCH.

830: The terminal device parses the downlink control information, and performs data decoding.

It should be understood that in downlink data transmission, because data transmission, buffering, and resource scheduling are all located on a gNB side, the gNB determines whether to transmit the coding parameter information.

Similar to uplink transmission, the gNB defines three states for each HARQ process, and determines, based on a current state, how to transmit downlink data and the coding parameter information:

State A: The gNB indicates to the UE that current transmission is new transmission, and indicates the UE to transmit the coding parameter information.

State B: The gNB indicates to the UE that current transmission is retransmission, and indicates the UE to transmit the coding parameter information.

State C: The gNB indicates to the UE that current transmission is retransmission, and indicates the UE not to transmit the coding parameter information.

The UE first attempts to decode the downlink control information (for example, the DCI 1). If the downlink control information is successfully decoded, the UE decodes data on the PDSCH based on an indication in the downlink control information, and feeds back a corresponding decoding result to the gNB.

In the downlink data transmission in this application, the UE side needs to feed back a decoding result of the coding parameter information to the gNB, and also needs to feed back a decoding result of the data to the gNB.

The UE feeds back, to the gNB, whether the coding parameter information is successfully received. In an example, feedback may be performed by adding one bit based on a HARQ-ACK or using a new UCI type. This is not limited.

The UE feeds back the decoding result of the data based on a TB or a CBG. It should be noted that, if the coding parameter information is not successfully received, the feedback of the data is a negative acknowledgment (NACK).

The gNB determines, based on the received two decoding results fed back by the UE side, how to change a status of a current HARQ process, and performs a subsequent operation based on a new status.

The foregoing describes in detail the data transmitting and data receiving procedures provided in this application. As described above, in uplink data transmission, the coding parameter information may be used as a new type of UCI. In addition, in an example, the coding parameter information and the uplink data may be multiplexed on the PUSCH for transmission. When the UE multiplexes the coding parameter information and the uplink data on the PUSCH for transmission, the following requirements need to be met:

Optionally, if SSCC processing is introduced at the physical layer, the coding parameter information may be a length $L'$ obtained through compression processing at the physical layer; or if JSCC processing is introduced at the physical layer, the coding parameter information may be length information of each sub-TB obtained through preprocessing before JSCC is performed. Optionally, the coding parameter information may further be a result obtained after the length information is quantized by using several bits. Optionally, a quantization rule may be configured by using higher layer signaling, for example, RRC signaling.

In addition, the UE calculates a size of the TB based on the resource indication and the MCS indication and a rule for calculating a TB size in NR, and then determines, based on parameters such as a payload size of each type of UCI, the size of the TB, and a code rate compensation factor of each type of UCI, a quantity of REs occupied by the coding parameter information and a coding code rate. A value of the coding parameter information is mapped onto an orthogonal frequency division multiplexing (orthogonal frequency division multiplexing, OFDM) symbol to which a demodulation reference signal (demodulation reference signal, DMRS) is not allocated. The each type of UCI herein may include one or more of HARQ-acknowledgment information (HARQ-acknowledgement, HARQ-ACK), channel state information (channel state information, CSI), and the coding parameter information proposed herein. Optionally, a priority of the coding parameter information is higher than a priority of CSI-part 1 (that is, CSI-1). Therefore, the coding parameter information is arranged before the CSI-part 1 during resource mapping.

For example, a quantity of REs occupied by the HARQ-ACK may be determined through calculation with reference to the following Formula (1):

$$Q'_{ACK} = \min\left\{ \left\lceil \frac{(O_{ACK} + L_{ACK}) \cdot \beta_{offset}^{HARQ-ACK} \cdot \sum_{l=0}^{N_{symb,all}^{PUSCH}-1} M_{SC}^{UCI}(l)}{\sum_{r=0}^{C_{UL-SCH}-1} K_r} \right\rceil, \left\lceil \alpha \cdot \sum_{l=0}^{N_{symb,all}^{PUSCH}-1} M_{SC}^{UCI}(l) \right\rceil \right\}$$

$$(1)$$

In Formula (1), $Q'_{ACK}$ represents the quantity of REs occupied by the HARQ-ACK after the coding parameter information (or referred to as new UCI) is introduced, $O_{ACK}$ represents a data bit length of the HARQ-ACK, $L_{ACK}$ represents a check length of the HARQ-ACK, $\beta_{offset}^{HARQ-ACK}$ represents a code rate compensation factor of the HARQ-ACK,

$N_{symb,all}^{PUSCH}$ represents a total quantity of OFDM symbols on the PUSCH, $M_{SC}^{UCI}(l)$ represents a quantity of REs that can be used to transmit the UCI on the $l^{th}$ symbol, and $\sum_{r=0}^{C_{UL-SCH}-1} K_r$ represents a total quantity of REs on the PUSCH (including REs allocated to each reference signal).

The quantity of REs occupied by the coding parameter information may be determined through calculation with reference to the following Formula (2):

$$Q'_{newUCI} = \min\left\{\left\lceil \frac{(O_{newUCI} + L_{newUCI}) \cdot \beta_{offset}^{newUCI} \cdot \sum_{l=0}^{N_{symb,all}^{PUSCH}-1} M_{SC}^{UCI}(l)}{\sum_{r=0}^{C_{UL-SCH}-1} K_r} \right\rceil, \left\lceil \alpha \cdot \sum_{l=0}^{N_{symb,all}^{PUSCH}-1} M_{SC}^{UCI}(l) \right\rceil - Q'_{ACK}\right\}$$

$$(2)$$

In Formula (2), $Q'_{newUCI}$ indicates a quantity of REs occupied by the new UCI, $O_{newUCI}$ represents a data bit length of the new UCI, $L_{newUCI}$ represents a check length of the new UCI, $\beta_{offset}^{newUCI}$ represents a code rate compensation factor of the new UCI, $N_{symb,all}^{PUSCH}$ represents a total quantity of OFDM symbols on the PUSCH,

$M_{SC}^{UCI}(l)$ represents a quantity of REs that can be used to transmit the UCI on the $l^{th}$ symbol, and $\sum_{r=0}^{C_{UL-SCH}-1} K_r$ represents a total quantity of REs on the PUSCH.

In addition, due to the coding parameter information provided in this application, quantities of REs occupied by the CSI-1 (if existing) and CSI-2 (if existing) may be determined through calculation with reference to the following Formula (3) and Formula (4) respectively:

$$Q'_{CSI1} = \min\left\{\left\lceil \frac{(O_{CSI1} + L_{CSI1}) \cdot \beta_{offset}^{CSI1} \cdot \sum_{l=0}^{N_{symb,all}^{PUSCH}-1} M_{SC}^{UCI}(l)}{\sum_{r=0}^{C_{UL-SCH}-1} K_r} \right\rceil, \left\lceil \alpha \cdot \sum_{l=0}^{N_{symb,all}^{PUSCH}-1} M_{SC}^{UCI}(l) \right\rceil - Q'_{ACK} - Q'_{newUCI}\right\}$$

$$(3)$$

In Formula (3), $Q'_{CSI1}$ represents a quantity of REs occupied by CSI1 after the new UCI is introduced, $O_{CSI1}$

represents a data bit length of CSI1, $L_{CSI1}$ represents a check length of CSI1, $\beta_{offset}^{CSI1}$ represents a code rate compensation factor of CSI1, $N_{symb,all}^{PUSCH}$ represents a total quantity of OFDM symbols on the PUSCH, $M_{SC}^{UCI}(l)$

represents a quantity of REs that can be used to transmit the UCI on the $l^{th}$ symbol, and $\sum_{r=0}^{C_{UL-SCH}-1} K_r$ represents a total quantity of REs on the PUSCH.

$$Q'_{CSI2} = \min\left\{\left\lceil \frac{(O_{CSI2} + L_{CSI2}) \cdot \beta_{offset}^{CSI2} \cdot \sum_{l=0}^{N_{symb,all}^{PUSCH}-1} M_{SC}^{UCI}(l)}{\sum_{r=0}^{C_{UL-SCH}-1} K_r} \right\rceil, \left\lceil \alpha \cdot \sum_{l=0}^{N_{symb,all}^{PUSCH}-1} M_{SC}^{UCI}(l) \right\rceil - Q'_{ACK} - Q'_{newUCI} - Q'_{CSI1}\right\}$$

$$(4)$$

In Formula (4), $Q'_{CSI2}$ represents a quantity of REs occupied by CSI2 after the new UCI is introduced, $O_{CSI2}$

represents a data bit length of CSI2, $L_{CSI2}$ represents a check length of CS12, $\beta_{offset}^{CSI2}$ represents a code rate compensation factor of CS12, $N_{symb,all}^{PUSCH}$ represents a total quantity of OFDM symbols on the PUSCH, $M_{SC}^{UCI}(l)$ represents a quantity of REs that can be used to transmit the UCI on the $l^{th}$ symbol, and $\sum_{r=0}^{C_{UL-SCH}-1} K_r$ represents a total quantity of REs on the PUSCH.

In the foregoing Formula (1) to Formula (4), a symbol $\lceil \rceil$ represents rounding up.

The foregoing describes in detail the method for transmitting data and receiving data provided in this application. The following describes a communication apparatus provided in this application.

FIG. 11 is a block diagram of a communication apparatus according to this application. As shown in FIG. 11, the communication apparatus 1000 includes a processing unit 1100, a receiving unit 1200, and a transmitting unit 1300.

Optionally, the communication apparatus 1000 may correspond to the transmitting end in embodiments of this application.

In this case, the units of the communication apparatus 1000 are configured to implement the following functions:

The processing unit 1100 is configured to:

obtain coding parameter information of first data, where the coding parameter information indicates information related to physical layer data processing of the communication apparatus, the physical layer data processing includes performing first coding on a TB, and the first coding is a coding mode in which compression and channel coding are separated; or the physical layer data processing includes separately performing second coding on a plurality of sub-TBs obtained based on the TB, and the second coding is a coding mode in which compression and channel coding are combined; and

determine whether to transmit the coding parameter information to a receiving end.

Optionally, in an embodiment, that the physical layer data processing includes performing first coding on a TB is specifically: compressing the TB to obtain a compressed TB, and then performing channel coding and rate matching on the compressed TB; and

the coding parameter information specifically indicates a size of the compressed TB.

Optionally, in an embodiment, in a case that the physical layer data processing includes separately performing the second coding on the plurality of sub-TBs obtained based on the TB,

the plurality of sub-TBs include a control information sub-TB and X sub-TBs, the X sub-TBs are obtained by dividing the TB into a plurality of preprocessing blocks PBs and combining PBs whose sparsities fall within a same sparsity range into one sub-TB, the control information sub-TB indicates information about respective sparsities of the plurality of PBs, X is less than or equal to Y, Y is a quantity of preset sparsity ranges, Y is less than or equal to $2^Q$, and X, Y, and Q are positive integers; and

the coding parameter information is length information of each of the plurality of sub-TBs.

Optionally, in an embodiment, the plurality of PBs are specifically B PBs, and B is a positive integer;

the control information sub-TB specifically indicates indices of sparsity ranges corresponding to the sparsities of the B PBs, a sparsity range corresponding to a sparsity of each of the B PBs is one of $2^Q$ preset sparsity ranges, and Q is a positive integer; and

the control information sub-TB includes $B \cdot Q$ bits.

Optionally, in an embodiment, the first data is newly transmitted data; and the processing unit 1100 is specifically configured to determine to transmit the coding parameter information to the receiving end.

Optionally, in an embodiment, the communication apparatus is a terminal device.

The receiving unit 1200 is configured to receive first indication information from the receiving end, where the first indication information indicates the communication apparatus to transmit the coding parameter information.

The processing unit 1100 is configured to determine, based on the first indication information, to transmit the coding parameter information.

Further, in this embodiment, the transmitting unit 1300 is configured to transmit the first data and the coding parameter information of the first data.

Optionally, in an embodiment, the first data is retransmitted data, and the communication apparatus is a terminal device.

The receiving unit 1200 is configured to receive second indication information from the receiving end, where the second indication information indicates the communication apparatus to transmit the coding parameter information.

The processing unit 1100 is configured to determine, based on the second indication information, to transmit the coding parameter information to the receiving end.

Further, in this embodiment, the transmitting unit 1300 is configured to transmit the first data and the coding parameter information to the receiving end.

Optionally, in an embodiment, the first data is retransmitted data, and the communication apparatus is a terminal device.

The receiving unit 1200 is configured to receive second indication information from the receiving end, where the second indication information indicates the communication apparatus not to transmit the coding parameter information.

The processing unit 1100 is configured to determine, based on the second indication information, not to transmit the coding parameter information to the receiving end.

Further, in this embodiment, the transmitting unit 1300 is configured to transmit the first data to the receiving end.

Optionally, in an embodiment, the first data is retransmitted data, and the communication apparatus is a network device.

The receiving unit 1200 is configured to receive first feedback information from the receiving end, where the first feedback information indicates that the receiving end does not correctly decode the coding parameter information.

The processing unit 1100 is configured to determine, based on the first feedback information, to transmit the coding parameter information to the receiving end.

The receiving unit 1200 is further configured to receive second feedback information from the receiving end, where the second feedback information indicates that the receiving end does not correctly decode the first data.

The transmitting unit 1300 is further configured to retransmit the first data to the receiving end based on the second feedback information.

Optionally, in an embodiment, the first data is retransmitted data, and the transmitting end is a network device.

The receiving unit 1200 is configured to receive third feedback information from the receiving end, where the third feedback information indicates that the receiving end correctly decodes the coding parameter information.

The processing unit 1100 is configured to determine, based on the third feedback information from the receiving end, not to transmit the coding parameter information to the receiving end.

The receiving unit 1200 is configured to receive fourth feedback information from the receiving end, where the fourth feedback information indicates that the receiving end does not correctly decode the first data.

The transmitting unit 1300 is configured to retransmit the first data to the receiving end based on the fourth feedback information.

Optionally, the communication apparatus 1000 may correspond to the receiving end in embodiments of this application.

In this case, the units of the communication apparatus 1000 are configured to implement the following functions:

The receiving unit 1200 is configured to receive first data from a transmitting end.

The processing unit 1100 is configured to decode the first data based on coding parameter information of the first data.

The coding parameter information indicates information related to physical layer data processing of the transmitting end, the physical layer data processing includes performing first coding on a TB, and the first coding is a coding mode in which compression and channel coding are separated; or the physical layer data processing includes separately performing second coding on a plurality of sub-TBs obtained based on the TB, and the second coding is a coding mode in which compression and channel coding are combined.

Optionally, in an embodiment, that the physical layer data processing includes performing first coding on a TB is specifically: compressing the TB to obtain a compressed TB, and then performing channel coding and rate matching on the compressed TB; and

the coding parameter information specifically indicates a size of the compressed TB.

Optionally, in an embodiment, in a case that the physical layer data processing includes separately performing the second coding on the plurality of sub-TBs obtained based on the TB,

the plurality of sub-TBs include a control information sub-TB and X sub-TBs, the X sub-TBs are obtained by dividing the TB into a plurality of preprocessing blocks PBs and combining PBs whose sparsities fall within a same sparsity range into one sub-TB, the control information sub-TB indicates information about respective sparsities of the plurality of PBs, X is less than or equal to Y, Y is a quantity of preset sparsity ranges, Y is less than or equal to $2^Q$, and X, Y, and Q are positive integers; and

the coding parameter information is length information of each of the plurality of sub-TBs.

Optionally, in an embodiment, the plurality of PBs are specifically B PBs, and B is a positive integer;

the control information sub-TB specifically indicates indices of sparsity ranges corresponding to the sparsities of the B PBs, a sparsity range corresponding to a sparsity of each of the B PBs is one of $2^Q$ preset sparsity ranges, and Q is a positive integer; and

the control information sub-TB includes B·Q bits.

Optionally, in an embodiment, the first data is newly transmitted data, and the receiving unit 1200 is further configured to:

receive the coding parameter information from the transmitting end.

Optionally, in an embodiment, the communication apparatus is a network device, and the transmitting unit 1300 is configured to:

transmit first indication information to the transmitting end, where the first indication information indicates the transmitting end to transmit the coding parameter information.

Optionally, in an embodiment, the first data is retransmitted data, and the communication apparatus is a network device.

The processing unit 1100 is configured to determine that the coding parameter information is not correctly decoded.

The transmitting unit 1300 is configured to transmit second indication information to the transmitting end, where the second indication information indicates the transmitting end to transmit the coding parameter information.

The receiving unit 1200 is configured to receive the coding parameter information from the transmitting end.

Alternatively,

the processing unit 1100 is configured to determine that the coding parameter information is correctly decoded.

The transmitting unit 1300 is configured to transmit second indication information to the transmitting end, where the second indication information indicates the transmitting end not to transmit the coding parameter information.

Optionally, in an embodiment, the first data is retransmitted data, and the communication apparatus is a terminal device.

The transmitting unit 1300 is configured to transmit first feedback information and second feedback information to the transmitting end, where the first feedback information indicates that the communication apparatus does not correctly decode the coding parameter information, and the second feedback information indicates that the communication apparatus does not correctly decode the first data.

The receiving unit 1200 is configured to receive the coding parameter information from the transmitting end.

Optionally, in an embodiment, the first data is retransmitted data, and the communication apparatus is a terminal device.

The transmitting unit 1300 is configured to transmit third feedback information and fourth feedback information to the transmitting end, where the third feedback information indicates that the communication apparatus correctly decodes the coding parameter information, and the fourth feedback information indicates that the communication apparatus does not correctly decode the first data.

In the foregoing implementations, the receiving unit 1200 and the transmitting unit 1300 may alternatively be integrated into one transceiver unit or one input/output unit that has both a receiving function and a transmitting function. This is not limited herein.

In embodiments that the communication apparatus 1000 corresponds to the transmitting end, the processing unit 1100 is configured to perform processing and/or operations implemented inside the transmitting end in addition to transmitting and receiving actions. The receiving unit 1200 is configured to perform a receiving action of the transmitting end, and the transmitting unit 1300 is configured to perform a transmitting action of the transmitting end.

For example, in FIG. 6, the processing unit 1100 performs step 310 and step 320; and the transmitting unit 1300 performs the transmitting action in step 330.

For another example, in FIG. 8, the transmitting unit 1300 performs the transmitting actions in step 610 and step 630, and the receiving unit 1200 performs the receiving action in step 620.

For another example, in FIG. 10, the transmitting unit 1300 performs the transmitting actions in step 810 and step 820, and the processing unit 1100 performs step 830.

In embodiments that the communication apparatus 1000 corresponds to the receiving end, the processing unit 1100 is configured to perform processing and/or operations implemented inside the receiving end in addition to transmitting and receiving actions. The receiving unit 1200 is configured to perform a receiving action of the receiving end, and the transmitting unit 1300 is configured to perform a transmitting action of the receiving end.

For example, in FIG. 6, the receiving unit 1200 performs the receiving action in step 330, and the processing unit 1100 performs step 340.

For another example, in FIG. 8, the receiving unit 1200 performs the receiving actions in step 610 and step 630, the transmitting unit 1300 performs the transmitting action in step 620, and the processing unit 1100 performs step 640.

For another example, in FIG. 10, the receiving unit 1200 performs the receiving actions in step 810 and step 820.

FIG. 12 is a diagram of a structure of a communication apparatus according to this application. As shown in FIG.

12, the communication apparatus 10 includes one or more processors 11, one or more memories 12, and one or more communication interfaces 13. The processor 11 is configured to control the communication interface 13 to receive and transmit signals. The memory 12 is configured to store a computer program. The processor 11 is configured to invoke the computer program from the memory 12 and run the computer program, so that the communication apparatus 10 performs processing performed by the transmitting end or the receiving end in the method embodiments of this application.

For example, the processor 11 may have a function of the processing unit 1100 shown in FIG. 11, and the communication interface 13 may have functions of the receiving unit 1200 and/or the transmitting unit 1300. Specifically, the processor 11 may be configured to perform processing or operations performed inside the communication apparatus, and the communication interface 13 is configured to perform a transmitting and/or receiving operation performed by the communication apparatus.

In an implementation, the communication apparatus 10 may be the transmitting end in the method embodiments. In this implementation, the communication interface 13 may be a transceiver of the transmitting end. The transceiver may include a receiver and/or a transmitter. Optionally, the processor 11 may be a baseband apparatus of the transmitting end, and the communication interface 13 may be a radio frequency apparatus.

In another implementation, the communication apparatus 10 may be a chip (or a chip system) installed in the transmitting end. In this implementation, the communication interface 13 may be an interface circuit or an input/output interface.

In an implementation, the communication apparatus 10 may be the receiving end in the method embodiments. In this implementation, the communication interface 13 may be a transceiver of the receiving end. The transceiver may include a receiver and/or a transmitter. Optionally, the processor 11 may be a baseband apparatus of the receiving end, and the communication interface 13 may be a radio frequency apparatus.

In another implementation, the communication apparatus 10 may be a chip (or a chip system) installed in the receiving end. In this implementation, the communication interface 13 may be an interface circuit or an input/output interface.

In FIG. 12, a dashed box behind a component (for example, the processor, the memory, or the communication interface) indicates that there may be at least one component.

Optionally, the memory and the processor in the foregoing apparatus embodiments may be physically independent units, or the memory and the processor may be integrated together. This is not limited in this specification.

In addition, this application further provides a computer-readable storage medium. The computer-readable storage medium stores computer instructions, and when the computer instructions are run on a computer, operations and/or processing performed by the transmitting end in the method embodiments of this application are performed.

This application further provides a computer-readable storage medium. The computer-readable storage medium stores computer instructions, and when the computer instructions are run on a computer, operations and/or processing performed by the receiving end in the method embodiments of this application are performed.

In addition, this application further provides a computer program product. The computer program product includes computer program code or instructions, and when the computer program code or the instructions are run on a computer, operations and/or processing performed by the transmitting end in the method embodiments of this application are performed.

This application further provides a computer program product. The computer program product includes computer program code or instructions, and when the computer program code or the instructions are run on a computer, operations and/or processing performed by the receiving end in the method embodiments of this application are performed.

In addition, this application further provides a chip. The chip includes a processor, a memory configured to store a computer program is disposed independent of the chip, and the processor is configured to execute the computer program stored in the memory, to enable an apparatus in which the chip is installed to perform operations and/or processing performed by the transmitting end in any method embodiment.

Further, the chip may also include a communication interface. The communication interface may be an input/output interface, an interface circuit, or the like. Further, the chip may also include the memory.

This application further provides a chip. The chip includes a processor, a memory configured to store a computer program is disposed independent of the chip, and the processor is configured to execute the computer program stored in the memory, to enable an apparatus in which the chip is installed to perform operations and/or processing performed by the receiving end in any method embodiment.

Further, the chip may also include a communication interface. The communication interface may be an input/output interface, an interface circuit, or the like. Further, the chip may also include the memory.

Optionally, there may be one or more processors, there may be one or more memories, and there may be one or more memories.

In addition, this application further provides a communication apparatus (for example, may be a chip or a chip system), including a processor and a communication interface. The processor is configured to obtain coding parameter information of first data, and determine whether to transmit the coding parameter information to a receiving end; and the communication interface is configured to output the coding parameter information when the processor determines to transmit the coding parameter information to the receiving end.

This application further provides a communication apparatus (for example, may be a chip or a chip system), including a processor and a communication interface. The communication interface is configured to receive first data from a transmitting end and transmit the first data to the processor; the processor is configured to decode the first data based on coding parameter information of the first data; and the communication interface is configured to output a decoding result.

In addition, this application further provides a communication apparatus, including at least one processor. The at least one processor is coupled to at least one memory, and the at least one processor is configured to execute a computer program or instructions stored in the at least one memory, to enable the communication apparatus to perform operations and/or processing performed by the transmitting end in any method embodiment.

This application further provides a communication apparatus, including at least one processor. The at least one processor is coupled to at least one memory, and the at least one processor is configured to execute a computer program or instructions stored in the at least one memory, to enable the communication apparatus to perform operations and/or processing performed by the receiving end in any method embodiment.

In addition, this application further provides a wireless communication system, including the transmitting end and the receiving end in the method embodiments of this application.

It should be noted that "and/or" describes an association relationship of associated objects and represents that three relationships may exist. For example, A and/or B may represent the following three cases: Only A exists, both A and B exist, and only B exists. A quantity of A is not limited, and may be one or more. A quantity of B is not limited either, and may be one or more.

In addition, in the foregoing embodiments, first, second, third, and the like are merely intended to distinguish between different objects, and shall not constitute any limitation to this application. For example, different indication information, different feedback information, and the like are distinguished.

The processor mentioned in embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitative description, RAMs in many forms are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DRRAM). It should be noted that the memory of the systems and methods described in this specification is intended to include but is not limited to these and any memory of another proper type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in the form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A method for transmitting data, comprising:

   obtaining, by a transmitting end, coding parameter information of first data, wherein the coding parameter information indicates information related to physical layer data processing of the transmitting end, the physical layer data processing comprises performing first coding on a transport block TB, and the first coding is a coding mode in which compression and channel coding are separated; or the physical layer data processing comprises separately performing second coding on a plurality of sub-TBs obtained based on the TB, and the second coding is a coding mode in which compression and channel coding are combined; and
   determining, by the transmitting end, whether to transmit the coding parameter information to a receiving end.

2. The method according to claim 1, wherein that the physical layer data processing comprises performing first coding on a TB is specifically: compressing the TB to obtain a compressed TB, and then performing channel coding and rate matching on the compressed TB; and
   the coding parameter information specifically indicates a size of the compressed TB.

3. The method according to claim 1, wherein in a case that the physical layer data processing comprises separately performing the second coding on the plurality of sub-TBs obtained based on the TB,

   the plurality of sub-TBs comprise a control information sub-TB and X sub-TBs, the X sub-TBs are obtained by dividing the TB into a plurality of preprocessing blocks PBs and combining PBs whose sparsities fall within a same sparsity range into one sub-TB, the control information sub-TB indicates information about respective sparsities of the plurality of PBs, X is less than or equal to Y, Y is a quantity of preset sparsity ranges, Y is less than or equal to $2^Q$, and X, Y, and Q are positive integers; and
   the coding parameter information is length information of each of the plurality of sub-TBs.

4. The method according to claim 3, wherein the plurality of PBs are specifically B PBs, and B is a positive integer;

   the control information sub-TB specifically indicates indices of sparsity ranges corresponding to the sparsities of the B PBs, a sparsity range corresponding to a sparsity of each of the B PBs is one of $2^Q$ preset sparsity ranges, and Q is a positive integer; and
   the control information sub-TB comprises B·Q bits.

5. The method according to any one of claims 1 to 4, wherein the first data is newly transmitted data; and
   the determining, by the transmitting end, whether to transmit the coding parameter information to a receiving end comprises:

determining, by the transmitting end, to transmit the coding parameter information to the receiving end.

6. The method according to claim 5, wherein the transmitting end is a terminal device; and
the determining, by the transmitting end, to transmit the coding parameter information to the receiving end comprises:

receiving, by the transmitting end, first indication information from the receiving end, wherein the first indication information indicates the transmitting end to transmit the coding parameter information; and
determining, by the transmitting end based on the first indication information, to transmit the coding parameter information.

7. The method according to any one of claims 1 to 4, wherein the first data is retransmitted data, and the transmitting end is a terminal device;
the determining, by the transmitting end, whether to transmit the coding parameter information to a receiving end comprises:

receiving, by the transmitting end, second indication information from the receiving end, wherein the second indication information indicates the transmitting end to transmit the coding parameter information; and
determining, by the transmitting end based on the second indication information, to transmit the coding parameter information to the receiving end;
or
the determining, by the transmitting end, whether to transmit the coding parameter information to a receiving end comprises:

receiving, by the transmitting end, second indication information from the receiving end, wherein the second indication information indicates the transmitting end not to transmit the coding parameter information; and
determining, by the transmitting end based on the second indication information, not to transmit the coding parameter information to the receiving end.

8. The method according to any one of claims 1 to 4, wherein the first data is retransmitted data, and the transmitting end is a network device;
the determining, by the transmitting end, whether to transmit the coding parameter information to a receiving end comprises:

receiving, by the transmitting end, first feedback information from the receiving end, wherein the first feedback information indicates that the receiving end does not correctly decode the coding parameter information; and
determining, by the transmitting end based on the first feedback information, to transmit the coding parameter information to the receiving end; and
the method further comprises:

receiving, by the transmitting end, second feedback information from the receiving end, wherein the second feedback information indicates that the receiving end does not correctly decode the first data; and
retransmitting, by the transmitting end based on the second feedback information, the first data to the receiving end.

9. The method according to any one of claims 1 to 4, wherein the first data is retransmitted data, and the transmitting end is a network device;
the determining, by the transmitting end, whether to transmit the coding parameter information to a receiving end comprises:

receiving, by the transmitting end, third feedback information from the receiving end, wherein the third feedback information indicates that the receiving end correctly decodes the coding parameter information; and
determining, by the transmitting end based on the third feedback information, not to transmit the coding parameter information to the receiving end; and
the method further comprises:

receiving, by the transmitting end, fourth feedback information from the receiving end, wherein the fourth feedback information indicates that the receiving end does not correctly decode the first data; and

retransmitting, by the transmitting end based on the fourth feedback information, the first data to the receiving end.

10. A method for receiving data, comprising:

receiving, by a receiving end, first data from a transmitting end; and

decoding, by the receiving end, the first data based on coding parameter information of the first data, wherein the coding parameter information indicates information related to physical layer data processing of the transmitting end, the physical layer data processing comprises performing first coding on a transport block TB, and the first coding is a coding mode in which compression and channel coding are separated; or the physical layer data processing comprises separately performing second coding on a plurality of sub-TBs obtained based on the TB, and the second coding is a coding mode in which compression and channel coding are combined.

11. The method according to claim 10, wherein that the physical layer data processing comprises performing first coding on a TB is specifically: compressing the TB to obtain a compressed TB, and then performing channel coding and rate matching on the compressed TB; and

the coding parameter information specifically indicates a size of the compressed TB.

12. The method according to claim 10, wherein in a case that the physical layer data processing comprises separately performing the second coding on the plurality of sub-TBs obtained based on the TB,

the plurality of sub-TBs comprise a control information sub-TB and X sub-TBs, the X sub-TBs are obtained by dividing the TB into a plurality of preprocessing blocks PBs and combining PBs whose sparsities fall within a same sparsity range into one sub-TB, the control information sub-TB indicates information about respective sparsities of the plurality of PBs, X is less than or equal to Y, Y is a quantity of preset sparsity ranges, Y is less than or equal to $2^Q$, and X, Y, and Q are positive integers; and

the coding parameter information is length information of each of the plurality of sub-TBs.

13. The method according to any one of claims 10 to 12, wherein the plurality of PBs are specifically B PBs, and B is a positive integer;

the control information sub-TB specifically indicates indices of sparsity ranges corresponding to the sparsities of the B PBs, a sparsity range corresponding to a sparsity of each of the B PBs is one of $2^Q$ preset sparsity ranges, and Q is a positive integer; and

the control information sub-TB comprises B·Q bits.

14. The method according to any one of claims 10 to 13, wherein the first data is newly transmitted data, and the method further comprises:

receiving, by the receiving end, the coding parameter information from the transmitting end.

15. The method according to claim 14, wherein the receiving end is a network device, and before the receiving, by a receiving end, first data from a transmitting end, the method further comprises:

transmitting, by the receiving end, first indication information to the transmitting end, wherein the first indication information indicates the transmitting end to transmit the coding parameter information.

16. The method according to any one of claims 10 to 13, wherein the first data is retransmitted data, and the receiving end is a network device;

before the receiving, by a receiving end, first data from a transmitting end, the method further comprises:

determining, by the receiving end, that the coding parameter information is not correctly decoded;

transmitting, by the receiving end, second indication information to the transmitting end, wherein the second indication information indicates the transmitting end to transmit the coding parameter information; and

receiving, by the receiving end, the coding parameter information from the transmitting end;

or

before the receiving, by a receiving end, first data from a transmitting end, the method further comprises:

determining, by the receiving end, that the coding parameter information is correctly decoded; and

transmitting, by the receiving end, second indication information to the transmitting end, wherein the second indication information indicates the transmitting end not to transmit the coding parameter information.

17. The method according to any one of claims 10 to 13, wherein the first data is retransmitted data, and the receiving end is a terminal device; and
    the method further comprises:

    transmitting, by the receiving end, first feedback information and second feedback information to the transmitting end, wherein the first feedback information indicates that the receiving end does not correctly decode the coding parameter information, and the second feedback information indicates that the receiving end does not correctly decode the first data; and
    receiving, by the receiving end, the coding parameter information from the transmitting end.

18. The method according to any one of claims 10 to 13, wherein the first data is retransmitted data, and the receiving end is a terminal device; and
    the method further comprises:
    transmitting, by the receiving end, third feedback information and fourth feedback information to the transmitting end, wherein the third feedback information indicates that the receiving end correctly decodes the coding parameter information, and the fourth feedback information indicates that the receiving end does not correctly decode the first data.

19. A communication apparatus, comprising:
    a processing unit, configured to:

    obtain coding parameter information of first data, wherein the coding parameter information indicates information related to physical layer data processing of the communication apparatus, the physical layer data processing comprises performing first coding on a transport block TB, and the first coding is a coding mode in which compression and channel coding are separated; or the physical layer data processing comprises separately performing second coding on a plurality of sub-TBs obtained based on the TB, and the second coding is a coding mode in which compression and channel coding are combined; and
    determine whether to transmit the coding parameter information to a receiving end.

20. The communication apparatus according to claim 19, wherein that the physical layer data processing comprises performing first coding on a TB is specifically: compressing the TB to obtain a compressed TB, and then performing channel coding and rate matching on the compressed TB; and
    the coding parameter information specifically indicates a size of the compressed TB.

21. The communication apparatus according to claim 19, wherein in a case that the physical layer data processing comprises separately performing the second coding on the plurality of sub-TBs obtained based on the TB,

    the plurality of sub-TBs comprise a control information sub-TB and X sub-TBs, the X sub-TBs are obtained by dividing the TB into a plurality of preprocessing blocks PBs and combining PBs whose sparsities fall within a same sparsity range into one sub-TB, the control information sub-TB indicates information about respective sparsities of the plurality of PBs, X is less than or equal to Y, Y is a quantity of preset sparsity ranges, Y is less than or equal to $2^Q$, and X, Y, and Q are positive integers; and
    the coding parameter information is length information of each of the plurality of sub-TBs.

22. The communication apparatus according to claim 21, wherein the plurality of PBs are specifically B PBs, and B is a positive integer;

    the control information sub-TB specifically indicates indices of sparsity ranges corresponding to the sparsities of the B PBs, a sparsity range corresponding to a sparsity of each of the B PBs is one of $2^Q$ preset sparsity ranges, and Q is a positive integer; and
    the control information sub-TB comprises B·Q bits.

23. The communication apparatus according to any one of claims 19 to 22, wherein the first data is newly transmitted data; and
    the processing unit is configured to determine to transmit the coding parameter information to the receiving end.

**24.** The communication apparatus according to claim 23, wherein the communication apparatus is a terminal device;

a receiving unit is configured to receive first indication information from the receiving end, wherein the first indication information indicates the transmitting end to transmit the coding parameter information; and the processing unit is configured to determine, based on the first indication information, to transmit the coding parameter information.

**25.** The communication apparatus according to any one of claims 19 to 22, wherein the first data is retransmitted data, and the communication apparatus is a terminal device;

a receiving unit is configured to receive second indication information from the receiving end, wherein the second indication information indicates the transmitting end to transmit the coding parameter information; and the processing unit is configured to determine, based on the second indication information, to transmit the coding parameter information to the receiving end;
or
a receiving unit is configured to receive second indication information from the receiving end, wherein the second indication information indicates the communication apparatus not to transmit the coding parameter information; and
the processing unit is configured to determine, based on the second indication information, not to transmit the coding parameter information to the receiving end.

**26.** The communication apparatus according to any one of claims 19 to 22, wherein the first data is retransmitted data, and the communication apparatus is a network device;

a receiving unit is configured to receive first feedback information from the receiving end, wherein the first feedback information indicates that the receiving end does not correctly decode the coding parameter information;
the processing unit is configured to determine, based on the first feedback information, to transmit the coding parameter information to the receiving end;
the receiving unit is further configured to receive second feedback information from the receiving end, wherein the second feedback information indicates that the receiving end does not correctly decode the first data; and
the communication apparatus further comprises:
a transmitting unit, configured to retransmit the first data to the receiving end based on the second feedback information.

**27.** The communication apparatus according to any one of claims 19 to 22, wherein the first data is retransmitted data, and the communication apparatus is a network device;

a receiving unit is configured to receive third feedback information from the receiving end, wherein the third feedback information indicates that the receiving end correctly decodes the coding parameter information;
the processing unit is configured to determine, based on the third feedback information, not to transmit the coding parameter information to the receiving end;
the receiving unit is further configured to receive fourth feedback information from the receiving end, wherein the fourth feedback information indicates that the receiving end does not correctly decode the first data; and
the communication apparatus further comprises:
a transmitting unit, further configured to retransmit the first data to the receiving end based on the fourth feedback information.

**28.** A communication apparatus, comprising:

a receiving unit, configured to receive first data from a transmitting end; and
a processing unit, configured to decode the first data based on coding parameter information of the first data, wherein
the coding parameter information indicates information related to physical layer data processing of the transmitting end, the physical layer data processing comprises performing first coding on a transport block TB, and the first coding is a coding mode in which compression and channel coding are separated; or the physical layer data processing comprises separately performing second coding on a plurality of sub-TBs obtained based on the TB, and the second coding is a coding mode in which compression and channel coding are combined.

29. The communication apparatus according to claim 28, wherein that the physical layer data processing comprises performing first coding on a TB is specifically: compressing the TB to obtain a compressed TB, and then performing channel coding and rate matching on the compressed TB; and
the coding parameter information specifically indicates a size of the compressed TB.

30. The communication apparatus according to claim 28, wherein in a case that the physical layer data processing comprises separately performing the second coding on the plurality of sub-TBs obtained based on the TB,

the plurality of sub-TBs comprise a control information sub-TB and X sub-TBs, the X sub-TBs are obtained by dividing the TB into a plurality of preprocessing blocks PBs and combining PBs whose sparsities fall within a same sparsity range into one sub-TB, the control information sub-TB indicates information about respective sparsities of the plurality of PBs, X is less than or equal to Y, Y is a quantity of preset sparsity ranges, Y is less than or equal to $2^Q$, and X, Y, and Q are positive integers; and
the coding parameter information is length information of each of the plurality of sub-TBs.

31. The communication apparatus according to any one of claims 28 to 30, wherein the plurality of PBs are specifically B PBs, and B is a positive integer;

the control information sub-TB specifically indicates indices of sparsity ranges corresponding to the sparsities of the B PBs, a sparsity range corresponding to a sparsity of each of the B PBs is one of $2^Q$ preset sparsity ranges, and Q is a positive integer; and
the control information sub-TB comprises B·Q bits.

32. The communication apparatus according to any one of claims 28 to 31, wherein the first data is newly transmitted data, and the receiving unit is configured to receive the coding parameter information from the transmitting end.

33. The communication apparatus according to claim 32, wherein the communication apparatus is a network device; and
the communication apparatus further comprises:
a transmitting unit, configured to transmit first indication information to the transmitting end, wherein the first indication information indicates the transmitting end to transmit the coding parameter information.

34. The communication apparatus according to any one of claims 28 to 31, wherein the first data is retransmitted data, the communication apparatus is a network device, and the communication apparatus further comprises a transmitting unit, wherein

the processing unit is further configured to determine that the coding parameter information is not correctly decoded;
the transmitting unit is configured to transmit second indication information to the transmitting end, wherein the second indication information indicates the transmitting end to transmit the coding parameter information; and
the receiving unit is configured to receive the coding parameter information from the transmitting end;
or
the processing unit is configured to determine that the coding parameter information is correctly decoded; and
the transmitting unit is configured to transmit second indication information to the transmitting end, wherein the second indication information indicates the transmitting end not to transmit the coding parameter information.

35. The communication apparatus according to any one of claims 28 to 31, wherein the first data is retransmitted data, and the communication apparatus is a terminal device; and
the communication apparatus further comprises:

a transmitting unit, configured to transmit first feedback information and second feedback information to the transmitting end, wherein the first feedback information indicates that the receiving end does not correctly decode the coding parameter information, and the second feedback information indicates that the receiving end does not correctly decode the first data; and
the receiving unit is further configured to receive the coding parameter information from the transmitting end.

36. The communication apparatus according to any one of claims 28 to 31, wherein the first data is retransmitted data, and the communication apparatus is a terminal device; and
the communication apparatus further comprises:

a transmitting unit, configured to transmit third feedback information and fourth feedback information to the transmitting end, wherein the third feedback information indicates that the receiving end correctly decodes the coding parameter information, and the fourth feedback information indicates that the receiving end does not correctly decode the first data.

37. A communication apparatus, comprising at least one processor, wherein the at least one processor is coupled to at least one memory, and the at least one processor is configured to execute a computer program or instructions stored in the at least one memory, to enable the communication apparatus to perform the method according to any one of claims 1 to 9 or the method according to any one of claims 10 to 18.

38. A chip, comprising a processor and a communication interface, wherein the processor is configured to obtain coding parameter information of first data, and perform the operation of determining whether to transmit the coding parameter information to a receiving end according to any one of claims 1 to 9, and the communication interface is configured to output the coding parameter information when the processor determines to transmit the coding parameter information to the receiving end; or
the communication interface is configured to receive first data from a transmitting end, and transmit the first data to the processor; and the processor is configured to perform the operation of decoding the first data based on coding parameter information of the first data according to any one of claims 10 to 18 and output a decoding result.

39. A computer-readable storage medium, wherein the computer-readable storage medium stores computer instructions, and when the computer instructions are run on a computer, the method according to any one of claims 1 to 9 or the method according to any one of claims 10 to 18 is implemented.

40. A computer program product, wherein the computer program product comprises computer program code, and when the computer program code is run on a computer, the method according to any one of claims 1 to 9 or the method according to any one of claims 10 to 18 is implemented.

41. A wireless communication system, comprising the communication apparatus according to any one of claims 19 to 27 and the communication apparatus according to any one of claims 28 to 36.

Network
device

UE 1                UE 2

FIG. 1

UE

Base
station

Report of BSR and
power headroom

Resource
scheduling

DCI 0

Coding,
modulation,
and resource
mapping

Uplink data

Data
decoding

FIG. 2

FIG. 3

FIG. 4

FIG. 5

<u>300</u>

```
┌─────────────┐                    ┌─────────────┐
│ Transmitting│                    │  Receiving  │
│     end     │                    │     end     │
└─────────────┘                    └─────────────┘
┌─────────────────┐                       │
│ 310: Obtain     │                       │
│ coding          │                       │
│ parameter       │                       │
│ information of  │                       │
│ first data      │                       │
└─────────────────┘                       │
┌─────────────────┐                       │
│ 320: Determine  │                       │
│ whether         │                       │
│ to transmit the │                       │
│ coding          │                       │
│ parameter       │                       │
│ information to  │                       │
│ the receiving   │                       │
│ end             │                       │
└─────────────────┘                       │
         │────── 330: First data ──────▶  │
         │                    ┌────────────────────┐
         │                    │ 340: Decode the    │
         │                    │ first data         │
         │                    │ based on the coding│
         │                    │ parameter          │
         │                    │ information        │
         │                    └────────────────────┘
         │                                │
```

FIG. 6

FIG. 7

600

```
┌──────────┐                              ┌──────────┐
│ Terminal │                              │ Network  │
│  device  │                              │  device  │
└──────────┘                              └──────────┘
```

610: Scheduling request
(including buffer status report)

620: Downlink control
information

630: First data

640: Decode the first data based
on coding parameter information
of the first data

FIG. 8

Coding parameter
information is successfully
decoded, and data is
successfully decoded

State A
New
transmission,
and F=1

Data is
successfully
decoded

Coding parameter
information is
successfully
decoded, and data is
successfully decoded

Coding parameter
information is
successfully
decoded

Data
fails to
be
decoded

State C
Retransmission,
and F=0

Coding parameter
information is
successfully decoded, and
data fails to be decoded

Coding
parameter
information
fails to be
decoded

State B
Retransmission,
and F=1

Coding parameter information
is successfully decoded, and
data fails to be decoded

FIG. 9

800

| Terminal device | | Network device |

810: Downlink control information
(including coding parameter information of first data)

820: First data

830: Parse the downlink control information, and perform data decoding

FIG. 10

Communication apparatus 1000

Processing unit 1100

Receiving unit 1200

Transmitting unit 1300

FIG. 11

Communication apparatus 10

Processor 11

Memory 12

Communication interface 13

FIG. 12

## INTERNATIONAL SEARCH REPORT

| | International application No. |
|---|---|
| | **PCT/CN2022/104586** |

| A. | CLASSIFICATION OF SUBJECT MATTER |
|---|---|
| | H04L1/00(2006.01)i;H04L1/18(2023.01)i |

According to International Patent Classification (IPC) or to both national classification and IPC

| B. | FIELDS SEARCHED |
|---|---|

Minimum documentation searched (classification system followed by classification symbols)

      H04L,H04W,H04B

Documentation searched other than minimum documentation to the extent that such documents are included in the fields searched

Electronic data base consulted during the international search (name of data base and, where practicable, search terms used)

      CNTXT, ENTXT, ENTXTC, VEN, 3GPP, IEEE: 独立, 分开, 分离, 信道 5d 编码, 信源 5d 编码, 压缩, 物理层, 物理信道, JSCC, SSCC, joint+, separa+, channel 5d coding, source 5d coding, compress+, physical, PHY

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113472480 A (VIVO COMMUNICATION TECHNOLOGY CO., LTD.) 01 October 2021 (2021-10-01)<br>    description, paragraphs [0002]-[0003], [0046]-[0259], and [0446]-[0450], and figures 1-5 | 1-2, 5-11, 14-20, 23-29, 32-41 |
| A | CN 101478373 A (BEIHANG UNIVERSITY) 08 July 2009 (2009-07-08)<br>    entire document | 1-41 |
| A | CN 103262630 A (INTEL CORP.) 21 August 2013 (2013-08-21)<br>    entire document | 1-41 |
| A | CN 112886971 A (BEIJING UNIVERSITY OF POSTS AND TELECOMMUNICATIONS) 01 June 2021 (2021-06-01)<br>    entire document | 1-41 |
| A | CN 113709463 A (HUAWEI TECHNOLOGIES CO., LTD.) 26 November 2021 (2021-11-26)<br>    entire document | 1-41 |
| A | CN 114448557 A (HUAWEI TECHNOLOGIES CO., LTD.) 06 May 2022 (2022-05-06)<br>    entire document | 1-41 |

☑ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 March 2023** | **21 March 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**EP 4 542 892 A1**

<table>
<tr><td colspan="3" align="center">INTERNATIONAL SEARCH REPORT</td><td>International application No.<br><br>**PCT/CN2022/104586**</td></tr>
<tr><td colspan="4">C.     DOCUMENTS CONSIDERED TO BE RELEVANT</td></tr>
<tr><td>Category*</td><td colspan="2">Citation of document, with indication, where appropriate, of the relevant passages</td><td>Relevant to claim No.</td></tr>
<tr><td>A</td><td colspan="2">WO 2022095865 A1 (HUAWEI TECHNOLOGIES CO., LTD.) 12 May 2022 (2022-05-12)<br>    entire document</td><td>1-41</td></tr>
<tr><td>A</td><td colspan="2">US 2015280751 A1 (SAMSUNG ELECTRONICS CO., LTD.) 01 October 2015 (2015-10-01)<br>    entire document</td><td>1-41</td></tr>
<tr><td>A</td><td colspan="2">US 2021351839 A1 (QUALCOMM INC.) 11 November 2021 (2021-11-11)<br>    entire document</td><td>1-41</td></tr>
<tr><td>A</td><td colspan="2">BEIJING JIAOTONG UNIVERSITY. "R1-2204057 CSI Compression with AI/ML"<br>*3GPP TSG RAN WG1 #109-e*, 29 April 2022 (2022-04-29),<br>    entire document</td><td>1-41</td></tr>
</table>

Form PCT/ISA/210 (second sheet) (July 2022)

**INTERNATIONAL SEARCH REPORT**
Information on patent family members

International application No.

**PCT/CN2022/104586**

| Patent document cited in search report | | | Publication date (day/month/year) | Patent family member(s) | | | Publication date (day/month/year) |
|---|---|---|---|---|---|---|---|
| CN | 113472480 | A | 01 October 2021 | CN | 113472480 | B | 27 September 2022 |
| | | | | WO | 2021197153 | A1 | 07 October 2021 |
| | | | | EP | 4084374 | A1 | 02 November 2022 |
| | | | | US | 2022368469 | A1 | 17 November 2022 |
| CN | 101478373 | A | 08 July 2009 | CN | 101478373 | B | 09 November 2021 |
| CN | 103262630 | A | 21 August 2013 | WO | 2012087549 | A2 | 28 June 2012 |
| | | | | WO | 2012087549 | A3 | 13 September 2012 |
| | | | | US | 2012155398 | A1 | 21 June 2012 |
| | | | | US | 8675577 | B2 | 18 March 2014 |
| | | | | TW | 201230850 | A | 16 July 2012 |
| | | | | TWI | 524802 | B | 01 March 2016 |
| | | | | EP | 2656579 | A2 | 30 October 2013 |
| | | | | EP | 2656579 | A4 | 02 April 2014 |
| | | | | EP | 2656579 | B1 | 18 March 2015 |
| | | | | CN | 103262630 | B | 21 December 2016 |
| CN | 112886971 | A | 01 June 2021 | CN | 112886971 | B | 25 November 2022 |
| CN | 113709463 | A | 26 November 2021 | None | | | |
| CN | 114448557 | A | 06 May 2022 | None | | | |
| WO | 2022095865 | A1 | 12 May 2022 | None | | | |
| US | 2015280751 | A1 | 01 October 2015 | KR | 20150111273 | A | 05 October 2015 |
| | | | | KR | 102190391 | B1 | 14 December 2020 |
| | | | | US | 9391646 | B2 | 12 July 2016 |
| US | 2021351839 | A1 | 11 November 2021 | None | | | |

Form PCT/ISA/210 (patent family annex) (July 2022)